# EUROPEAN PATENT APPLICATION

(11) **EP 4 841 952 A1**
(43) Date of publication of application: **18.11.2026**
(21) Application number: 26178111.6
(22) Date of filing: 12.05.2026
(51) Int. Cl.: H04L 41/5051, H04L 41/16, H04L 41/082, H04L 41/0896, H04L 41/5025, H04W 24/02, H04L 41/5009, H04L 43/0817

(54) **ARTIFICIAL INTELLIGENCE (AI) EDGE SERVICE MANAGEMENT PLATFORM**

(30) Priority: 13.05.2025 US 202519207149
(71) Applicant: T MOBILE INNOVATIONS LLC, Overland Park KS 66251-2100 (US)
(72) Inventor: CHEN, Zhisheng, Overland Park, 66221 (US)
(74) Representative: Suddaby, Mark Edward

(57) **Abstract**

A method of providing artificial intelligence (AI) edge service management, the method including receiving a registration request indicating a customer identifier (ID), customer premises edge (CPE) nodes, and first information associated with an Al model; generating, based on rules associated with the customer ID, application programming interfaces (APIs) for interacting with the Al model; creating an agent software package comprising second information associated with the Al model, the APIs, and an agent application to facilitate interactions with the Al model based on the APIs; initiating an installation of the agent software package on individual ones of one or more CPE nodes of the plurality of CPE nodes; collecting performance data associated with the Al model based on execution of the agent application on the individual ones of the one or more CPE nodes; and initiating, based on the performance data failing to satisfy criteria, an update of the Al model.

## Description

### CROSS-REFERENCE TO RELATED APPLICATIONS

None.

### STATEMENT REGARDING FEDERALLY SPONSORED RESEARCH OR DEVELOPMENT

Not applicable.

### REFERENCE TO A MICROFICHE APPENDIX

Not applicable.

### BACKGROUND

Recent advancements in artificial intelligence (AI) technologies can assist businesses in various aspects. For instance, AI can analyze a vast amount of data to identify patterns and trends, providing valuable insights for better strategic decision-making. AI can also assist in automating routine tasks (e.g., related to customer services and support) and basic analysis, freeing up human workforce for more complex work. AI can also assist in marketing, for example, generating recommendations based on individual customer preferences and behaviors, leading to higher customer satisfaction. AI can further assist in predicting future trends and customer behaviors (e.g., based on historical data), allowing businesses to proactively adapt strategies and optimize operations. Accordingly, there is a growing demand for deploying, managing, and operating various AI models.

### SUMMARY

In an embodiment, a computer-implemented method of providing artificial intelligence (AI) edge service management is disclosed. The method includes receiving, by an application stored in non-transitory memory of a core network node associated with a telecommunications service provider and executable by a processor of the core network node, a registration request indicating a customer identifier (ID) identifying a customer, a plurality of customer premises edge (CPE) nodes associated with the customer, and first information associated with at least one AI model; generating, by the application, based on one or more rules associated with the customer ID, one or more application programming interfaces (APIs) for interacting with the at least one AI model; creating, by the application, an agent software package comprising second information associated with the at least one AI model, the one or more APIs, and an agent application to facilitate interactions with the at least one AI model based on the one or more APIs, the second information being based on the first information; initiating, by the application, an installation of the agent software package on individual ones of one or more CPE nodes of the plurality of CPE nodes; collecting, by the application, performance data associated with the at least one AI model based on execution of the agent application on the individual ones of the one or more CPE nodes; and initiating, by the application, based on the performance data failing to satisfy one or more criteria, an update of the at least one AI model.

In another embodiment, a computer-implemented method of providing artificial intelligence (AI) edge service management is disclosed. The method includes receiving, by an application stored in non-transitory memory of a core network node associated with a telecommunications service provider network and executable by a processor of the core network node, from a network node associated with a customer network, a registration request indicating a customer identifier (ID) and at least one AI model; generating, by the application, based on one or more rules associated with the customer ID, one or more application programming interfaces (APIs) associated with the at least one AI model; creating, by the application, an agent software package comprising information associated with the at least one AI model, the one or more APIs, and an agent application to facilitate operations of the at least one AI model based on the one or more APIs; initiating, by the application, an installation of the agent software package on individual ones of a plurality of edge network nodes, each associated with one of the telecommunications service provider network or the customer network; collecting, by the application, runtime statistics associated with the operations of the at least one AI model based on execution of the agent application on the individual ones of the plurality of edge network nodes; and modifying, by the application, based on the runtime statistics, a number of the plurality of edge network nodes for hosting the at least one AI model.

In yet another embodiment, a method includes receiving, by an application stored in non-transitory memory of a core network node in a core network associated with a telecommunications service provider and executable by a processor of the core network node, from a first network node associated with a customer network, a request indicating at least one artificial intelligence (AI) model; selecting, by the application, one or more mobile edge AI nodes from the core network to host the at least one AI model; transmitting, by the application, individual ones of the selected one or more mobile edge AI nodes, an agent software package comprising information associated with the at least one AI model, one or more application programming interfaces (APIs), and an agent application; and collecting, by the application, performance data associated with the at least one AI model based on execution of the agent application on the individual ones of the one or more mobile edge AI nodes; and initiating, by the application, based on the performance data failing to satisfy one or more criteria, an update of the at least one AI model.

These and other features will be more clearly understood from the following detailed description taken in conjunction with the accompanying drawings and claims.

### BRIEF DESCRIPTION OF THE DRAWINGS

For a more complete understanding of the present disclosure, reference is now made to the following brief description, taken in connection with the accompanying drawings and detailed description, where like reference numerals represent like parts.
FIG. 1 is a block diagram of a network system according to an embodiment of the disclosure.
FIG. 2 is a sequence diagram illustrating an example method of providing artificial intelligence (AI) edge service management according to an embodiment of the disclosure.
FIG. 3 is a sequence diagram illustrating another example method of providing AI edge service management according to an embodiment of the disclosure.
FIG. 4 is a flow chart of a method according to an embodiment of the disclosure.
FIG. 5 is a flow chart of another method according to an embodiment of the disclosure.
FIG. 6 is a flow chart of yet another method according to an embodiment of the disclosure.
FIG. 7A and FIG. 7B are block diagrams of a fifth generation (5G) network according to an embodiment of the disclosure.
FIG. 8 is a block diagram of a computer system according to an embodiment of the disclosure.

### DETAILED DESCRIPTION

It should be understood at the outset that although illustrative implementations of one or more embodiments are illustrated below, the disclosed systems and methods may be implemented using any number of techniques, whether currently known or not yet in existence. The disclosure should in no way be limited to the illustrative implementations, drawings, and techniques illustrated below, but may be modified within the scope of the appended claims along with their full scope of equivalents.

While various artificial intelligence (AI) web services and tools are available to assist businesses in incorporating AI technologies into their operations, these AI web services may be unsuitable for internal tasks or workflows of a business organization. For instance, different businesses may have different data patterns, different performance metrics, and/or different business rules. Accordingly, some business operators may desire to build their own AI models tailoring to their specific business needs.

There are a wide variety of AI models, for example, including, but are not limited to, machine learning (ML) models, deep learning models, generative AI models, large-language models (LLMs), and retrieval-augmentation generation (RAG)-based models (that incorporate external knowledge databases into LLMs). There are also application-driven AI models, for example, including, but are not limited to, natural language processing (NLP) models, computer vision models, speech and/or audio processing models, and multi-modal models (that operate on text, audio, and/or images). Generally, operations of AI models may use a large amount of processing and/or memory resources.

In some examples, a business (e.g., an enterprise) may be operated from multiple locations (e.g., 100s, 1000s, or more locations) distributed nationwide and each of those locations may require access to and interactions with the same AI models. Thus, some business operators may look to cloud and/or edge computing to provide processing and memory resources for deploying the same AI models on multiple edge nodes at different locations and offloading the computations associated with the AI models to those edge nodes. However, deploying, managing, and operating AI models across multiple different locations may require sophisticated and complex information technology (IT) and/or infrastructure expertise and support that some business operators may lack. In other examples, some business operators may prefer to run their AI computing on-premises (e.g., one their own network nodes) rather than on the cloud due to reasons, such as data security, ownership control, latency, and/or service management, but may desire to have the underlying IT and/or infrastructure support for deploying, managing, and operating AI models.

The present disclosure provides a technical solution to the aforementioned technical problems in the technical field of AI edge computing. More specifically, a telecommunication service provider may provide an AI edge service management (or orchestration) platform leveraging the connectivity and security that are built into the telecommunication service provider network. For instance, the AI edge service management platform may provide model as a service (MaaS), where AI models and associated applications (e.g., for interacting with the AI models) may be packaged into reusable services, enabling users (customers) to quickly and efficiently build, deploy, monitor, and invoke AI models without the need to develop and maintain the underlying foundational capabilities (e.g., the IT and/or infrastructure capabilities). Moreover, telecommunication service providers can support the edge application discovery function and identify the closest capable server for reducing the latency. They can also help collaborating application logic of a specific AI application including, such as, collecting data from various sources and calling different agent models to perform sub-computing tasks. To that end, AI models and associated applications may be hosted by 1) a telecommunication service provider, 2) a non-telecommunication service provider entity (e.g., an enterprise, or more generally, a business operator or business entity who is a customer of the telecommunications service provider), or 3) both the telecommunication service provider and the business operator (i.e., hybrid hosting).

For telecommunications service provider hosting, the telecommunication service provider may host AI models and associated AI edge applications for its customers (business operators) on network nodes (e.g., data centers, servers, etc.) that are at the edge of a core network of the telecommunication service provider. For business operator hosting, a business operator may host their own AI models and associated AI edge applications at their premises (e.g., on their own network nodes including servers, data centers, etc.) such as for the reasons discussed above, and the AI edge service management platform may treat those on-premises network nodes (at the customer sites) as an edge system of the telecommunication service provider network and may provide the same security protection to those on-premises network nodes as the telecommunications service provider's network nodes. Stated differently, the telecommunication service provider may consider the on-premises network nodes that participate in hosting AI models and associated applications on the AI model service management platform as part of the telecommunication service provider network. The on-premises network nodes may be located at the edge of the customer network (e.g., the business operator's network). For hybrid hosting, the telecommunications service provider may host a customer's AI models and associated applications on network nodes in the core network of the telecommunications service provider and on network nodes of the customer.

As used herein, mobile edge AI nodes may refer to network nodes that are located at the edge of a core network of a telecommunication service provider and participate in hosting AI models and associated applications on the AI edge service management platform. In some instances, the mobile edge AI nodes may also be referred to as network-based edge AI nodes. As used herein, customer premises edge (CPE) nodes may refer to on-premises network nodes that are located at the edge of a network operated by a business operator and participates in hosting the business operator's own AI models and associated applications on the AI edge service management platform. In some instances, the CPE nodes may also be referred to as remote edge AI nodes (e.g., from the perspective of the telecommunications service provider).

The AI edge service management platform may streamline the process of deploying, managing, and operating AI models and associated applications for all three use cases. For instance, for business operator hosting, a developer (of the business operator) may deploy trained AI model(s) once in the core network of the telecommunication service provider, and the AI edge service management platform may push (e.g., download and install) the AI model(s), associated libraries & tools, and associated applications to multiple registered edge locations (e.g., on-premises network nodes) and support local computing collaboration with performance monitoring, service-level agreement (SLA), data integration (e.g., extract-transform-load (ETL) solutions), load balancing, and dashboard reports. Further, the AI edge service management platform may provide access to the AI models and associated applications hosted by the business operator (e.g., on the on-premises network nodes) to nearby users securely via the telecommunication service provider network.

For telecommunication service provider hosting, a developer (of the business operator) may deploy trained AI model(s) once in the core network of the telecommunication service provider, and the AI edge service management platform may deploy (e.g., download and install) the AI model(s) and associated applications to a sequence of geographically distributed edge network nodes of the telecommunication service provider network securely. For hybrid hosting, a combination of the telecommunications service provider hosting and the business operator hosting operations discussed above may be performed. Further, the AI edge service management platform may provide a streamlined registration process for hosting AI models and standardizing application programming interface (APIs) for interactions with the hosted AI models for all three use cases.

According to an embodiment of the present disclosure (e.g., for business operator hosting), an AI edge service management application executing on a core network node (e.g., a computer system, a server, a data center, etc.) associated with a telecommunications service provider may receive, from a customer network node associated with a customer (a business operator), a registration request to register CPE nodes for hosting an AI model of the customer. For instance, the registration request may include a customer identifier (ID), location information associated with the CPE nodes, and first information associated with the AI model. The customer ID may be assigned to the customer by the telecommunications service provider based on an agreement (e.g., an SLA) between the telecommunications service provider and the customer. The AI model may include an ML model, a deep learning model, a generative AI model, an LLM, a RAG-based model, and/or a multi-modal model. The first information associated with the AI model (in the registration request) may include a model architecture and trained model parameters (e.g., weights and/or biases), knowledgebase (e.g., when the AI model is an LLM or a RAG-based model), software libraries (e.g., for preprocessing inputs to the AI model and/or post-processing outputs from the AI model), and/or test cases including input sample data and corresponding reference (or target) outputs.

In some instances, the CPE nodes may include wireless nodes that communicate with the telecommunications service provider network over wireless communication links (e.g., 3rd generation partnership project (3GPP) long-term evolution (LTE), fifth generation (5G), sixth-generation (6G), etc.). In some instances, the CPE nodes may include wireline nodes that communicate with the telecommunications service provider over wireline communication links (e.g., physical links, such as coaxial cable links, fiber optic cable links, power line links, etc.). To provide security protection, the AI edge service management application may establish a virtual private network (VPN) connection with the customer network node prior to the registration request, and the registration request may be communicated over the established VPN connection. In an embodiment, the telecommunications service provider network may be a 3GPP 5G network, and the VPN channel may be a 5G VPN channel.

Upon receiving the registration request, the AI edge service management application may evaluate the availability of resources (e.g., a number of central processing units (CPUs), a number of graphics processing units (GPUs), and/or an amount of memory by memory types) at each of the CPE nodes to ensure that the respective CPE node has sufficient processing and/or memory resources to host operations associated with the AI model. In some instances, the registration request may further indicate the resources (e.g., a number of central processing units (CPUs), a number of graphics processing units (GPUs), and/or an amount of memory by memory types) that are available at the CPE nodes, and the AI edge service management application may verify that the indicated resources are indeed available at each of those CPE nodes and are sufficient for hosting operations associated with the AI model.

The AI edge service management application may also evaluate the AI models in terms of resource requirements and performance. For instance, in some examples, the AI edge service management platform may quantize the model parameters of the AI model (e.g., based on a predetermined quantization scheme to limit the amount of processing and/or memory resources for hosting the AI model). As an example, the quantization scheme may specify a maximum data width (e.g., 4 bit, 8 bits, 16 bits, etc.) allowable for the model parameters of the AI model. The AI edge service management application may evaluate the performance of the quantized AI model (e.g., against the test cases received as part of the registration request). In some instances, the quantization may be optional.

If the resource availability evaluation is a pass (e.g., satisfying one or more criteria including various thresholds related to processing and/or memory resources) and the AI model evaluation is a pass (e.g., satisfying one or more criteria including various difference thresholds related to test cases), then the AI edge service management application may proceed to configure and initiate the hosting of the AI model and associated applications at the CPE nodes. For instance, the AI edge service management application may generate APIs for interacting with the AI model based on rules associated with the customer ID. The rules may be based on the SLA. For instance, the AI edge service management platform may provide a set of standardized APIs for AI model interactions, and the SLA may indicate a subset of the standardized APIs. Accordingly, the one or more rules may be defined based on the subset of APIs, and the AI edge service management application may generate the subset of the standardized APIs for interacting with the AI model. As an example, the standardized APIs may include APIs for various applications, for example, computer vision related APIs and LLM related APIs, and the SLA may specify only LLM related APIs but not computer vision related APIs. Accordingly, the AI edge service management application may generate the LLM related APIs but not the computer vision related APIs. Generally, the APIs may be mapped to the services specified by the particular application and/or service owners so that the AI edge service management application may generate the APIs according to the computing resource availability (e.g., where the computing capability are), the data for inferencing, and the specific models and tools that may be used. In some examples, the CPE nodes (for hosting AI applications) may be located in various zones (edge application server zones) and thus, the AI edge service management application may also generate APIs for mapping customer remote requests to the edge application server zone that is closest to the customers in terms of latency.

In some instances, the SLA may also indicate API authorization key information for end-user devices of the customer to access and interact with the AI model hosted at the CPE nodes. For instance, the API authorization key information may include user API keys for authorizing individual users, a group user API key for authorizing a group of users, developer API keys for authorizing individual developers (e.g., who build, test, and retrain the AI model), and/or a group developer API key for authorizing a group of developers. Accordingly, the AI edge service management application may generate the APIs further based on the key information. That is, the SLA may be embedded in the service and/or model APIs. Authentication may generally be controlled via APIs and industry-standard protocol authorization system (e.g., OAuth 2.0/3.0 systems for user authentication and Keycloak systems, which may provide more control flexibility, for developer authentication).

Next, the AI edge service management application may create an agent software package (e.g., a software image) including second information associated with the AI model, the generated APIs, and an agent application to facilitate interactions with the AI model using the generated APIs. The second information may be based on the first information (associated with the AI model) in the received registration request. Generally, the second information may be substantially the same as the first information. However, if the quantization was applied to the AI model, the second information may include the quantized model parameters instead of the model parameters of the AI model provided in the first information (in the registration request). The AI edge service management application may initiate a download and an installation of the agent software package on each individual one of the CPE nodes. That is, the customer may deploy the AI model and associated applications once, and the telecommunications service provider may propagate the AI model and associated applications to each registered CPE node. To provide security, the AI edge service management application may also establish a VPN connection with each CPE node and communicate with the CPE node over the established VPN connection.

After a CPE node received and installed the agent software package, the CPE node may execute the agent application to interact with users in using the AI model. For instance, the agent application may receive a request from a user device. The agent application may initiate the AI model to process the user request. The agent application may receive, from the AI model, an answer or a response to the request. The agent application may interface or interact with the AI model and the user device via calls to the APIs that are included in the agent software package.

As an example, the AI model may be a deep learning model trained for computer vision and classification, the user request may be an image, and the answer or output provided by the AI model may include a list of product items (of the business operator) detected from the image and corresponding confidence scores. As another example, the AI model may be an LLM, the user request may be a question related to information associated with a certain service provided by the business operator, and the answer or output provided by the AI model may include details about the certain service (e.g., cost, benefits, restrictions, etc.). As a further example, the AI model may be an ML model trained to predict inventory restocking based on sales data of a retail store. For instance, the retail store may have stores and/or warehouses across hundreds of locations and may use radio-frequency identification (RFID) technology to scan and track inventory, and thus the user request may be inventory tracking data, and the output provided by the AI model may indicate product items that need to be re-stocked or added.

The AI edge service management application may collect runtime statistics (e.g., history of AI model executions, CPU usage, GPU usage, memory usage, etc.) and/or performance data (e.g., accuracies of the AI model) associated with the AI model based on the execution of the agent application at respective CPE nodes. For instance, the AI edge service management platform may provide a central repository to store execution statistics and/or performance data associated with the AI model. To that end, the agent application at each respective CPE node may capture and report those runtime statistics and/or performance data to the AI edge service management application at the core network node. In an embodiment, the AI edge service management application may output the runtime statistics and/or performance data associated with the AI model to a dashboard via a user interface (e.g., a web portal or a web application). In an embodiment, the business operator may determine to scale (e.g., add or remove) CPE nodes for hosting the AI model based on the runtime statistics. For instance, the AI edge service management application may receive, from the customer network node, a request to register additional CPE node(s) or remove CPE node(s) from the current registered CPE nodes for hosting the AI model.

In an embodiment, the AI edge service management application may monitor and analyze the performance data to determine whether there is any degradation in the AI model performance. The AI model performance can degrade due to various reasons (e.g., a data drift where the distribution of the input data changes, a model drift where input and target **output relationship** changes, etc.). Generally, the AI edge service management application may use any suitable techniques or algorithms (e.g., statistical-based, metric-based, etc.) to monitor AI model performance degradation.

In an example of data drifting, AI may be used to predict customer purchase behavior based on user demographics and website activities. The feature of user age group can change over time. The production data may show that after one year a significant increase in users from younger age groups (e.g., 18-24) due to a successful social media campaign targeting that demographic. Some statistic test tools can be set to test the input data on these aspects. Once a data drift is identified, the prediction logic in the AI model may be adjusted to reflect the data changes. In an example of model drifting, a fraud detection model may predict fraudulent transactions in real-time. The model prediction capability can degrade due to various reasons. For instance, the initial "recall is above 90%" but the recall drops to 75% after a year due to evolving fraud patterns that the model hasn't seen during training. In some examples, sliding window analysis may be used to detect the degradation. Once a model is identified, the model may be retrained based on new data.

Upon the AI edge service management application determining that the performance data associated with the AI model fails to satisfy one or more criteria (e.g., a performance degradation due to data and/or model drift), the AI edge service management application may initiate an update of the AI model. To that end, the AI edge service management application may transmit, to the network node of the customer network (which requested the registration), an instruction to initiate an update (or retrain) of the AI model. In some instances, the instruction may include the performance data and/or indications of where degradation is detected in the performance data. Developer(s) or data scientist(s) of the business operator may retrain and update the AI model (e.g., with updated model parameters). Subsequently, the network node of the customer network may transmit, to the AI edge service management application, an updated AI model (including the updated model parameters). Upon the AI edge service management application receiving the updated AI model, the AI edge service management application may deploy the updated AI model on each of the CPE nodes using substantially similar mechanisms as discussed above. In some instances, the AI edge service management application may generate a software update patch including the updated AI model and initiate a download and an installation of the software update patch on each of the CPE nodes. That is, the customer may deploy the updated AI model once, and the telecommunications service provider may propagate the updated AI model to each registered CPE node.

According to another embodiment of the present disclosure (e.g., for telecommunications service provider hosting), the AI edge service management application may host an AI model and associated applications of a business operator (customer) on network nodes (e.g., mobile edge AI nodes) of the telecommunications service provider using substantially similar mechanisms as the business operator hosting use case. However, the AI edge service management application may select mobile edge AI nodes from the core network of the telecommunications service provider to host the customer's AI model. The selection may be based on various factors, such as geographical regions, time zones, latencies, throughputs, and/or resource constraints (e.g., related to processors, memory, power, connections, etc.) associated with the respective mobile edge AI nodes. In some examples, the selection factors may be based on an SLA between the telecommunications service provider and the customer (business operator). In some instances, as part of the selection, the AI edge service management application may evaluate the resource availability at the mobile edge AI nodes. After selecting the mobile edge AI nodes, the AI edge service management application may generate APIs for interacting with the AI model as discussed above. In some examples, the mobile edge AI nodes (for hosting AI applications) may be located in various zones (edge application server zones) and thus, the AI edge service management application may also generate APIs for mapping customer remote requests to the edge application server zone that is closest to the customers in terms of latency.

According to yet another embodiment of the present disclosure (e.g., for hybrid hosting), the AI edge service management application may host an AI model and associated applications of a business operator (customer) on mobile edge AI nodes of the telecommunications service provider and CPE nodes of the customer using substantially similar telecommunications service provider hosting and business operator hosting mechanisms as discussed above. In a further embodiment, the AI edge service management application may host AI models for multiple customers on the same mobile edge AI node. To provide security and isolation for hosting AI models between the different customers, the mobile edge AI nodes may include confidential computing hardware (e.g., trusted execution environment (TEE) that uses computing isolation technology built into the GPU(s), CPU(s), and/or memory). Additionally or alternatively, the telecommunications service provider may deploy the AI edge service management platform with redundancy (e.g., the AI edge service management application may be deployed at multiple locations (multiple network nodes) to provide failover support and recovery).

Providing an AI edge service management platform, for example, including underlying IT and/or infrastructure support to deploy, manage, and/or operate AI models across multiple geographical locations, to business operators that can allow the business operators to accelerate AI application development without the need to develop and maintain the underlying support. Having a telecommunications service provider to provide the AI edge service management platform can allow the AI edge service management platform to leverage the connectivity and security that are already built into the telecommunications service provider network. Considering CPE nodes that participate in AI model services hosting on the AI edge service management platform as an edge system of the telecommunications service provider can extend the telecommunications service provider's security to the CPE nodes. Utilizing standardized APIs across all business operators for AI model interactions can avoid redundant developments and increase reusability, thereby improving resource usage and allowing for a quick generation of agent software package when new business operators are registered.

Supporting AI model service hosting on mobile edge AI nodes of telecommunications service provider and/or CPE nodes of a business operator provides the business operator with the flexibility to leverage resources (e.g., processing and/or memory resources) of the telecommunications service provider. For instance, the business operator may scale up or scale down usage of their own resources (e.g., processing and/or memory resources) or the telecommunications service provider's resources (e.g., processing and/or memory resources), allowing the business operator to balance load and/or cost. Supporting AI model service hosting to be only on CPE nodes of a business operator enables the business operator to take advantage of the AI edge service management without concerns for data security and ownership control and may enable the business operator to have better control of latency and throughputs. Providing a central repository for runtime statistics and performance information allows business operators to monitor and review the runtime statistics and performance information (e.g., via a web portal) from any location. Proactively analyzing and monitoring AI model performance and initiating business operators to update their AI models based on performance degradation can assist the business operators to update their AI models at an earlier time, minimizing potential impacts to the business operations.

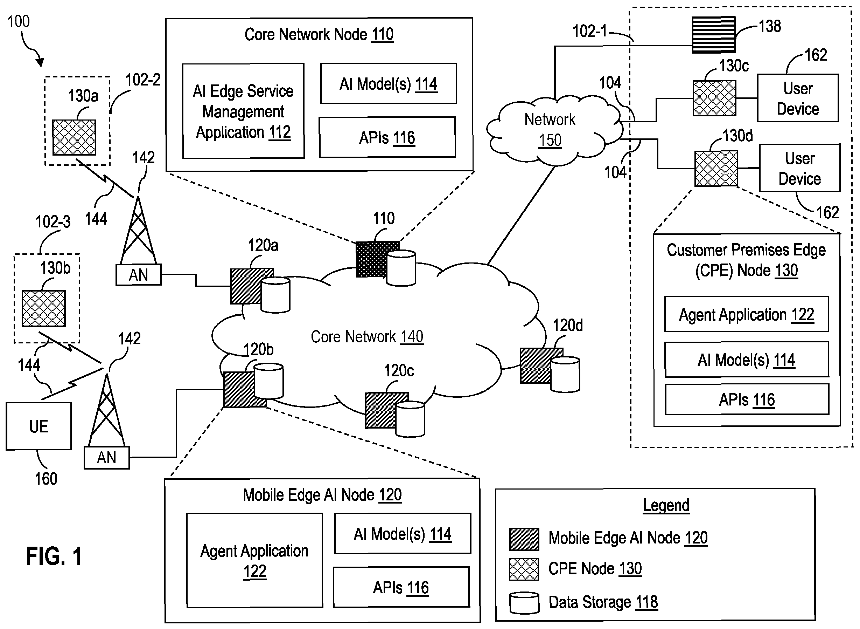

Turning now to FIG. 1, a network system 100 that provides AI edge service management is described. The network system 100 may include a core network 140, cell sites 142, a network 150, and a customer network 102 (shown as 102-1, 102-2, and 102-3, e.g., distributed in multiple geographical locations). The core network 140 and the cell sites 142 may be operated by a certain telecommunications service provider. The core network 140 may include a plurality of network nodes (e.g., individually shown as a core network node 110 and a plurality of mobile edge AI nodes 120a-120d) and associated data storages 118. The mobile edge AI nodes 120 are network nodes that are located at the edge of the core network 140 and may be distributed over multiple geographical locations. The mobile edge AI nodes 120a-120d may generally be referred to as mobile edge AI node 120. In some instances, the core network node 140 may also operate as an mobile edge AI node 120 as will be discussed more fully below.

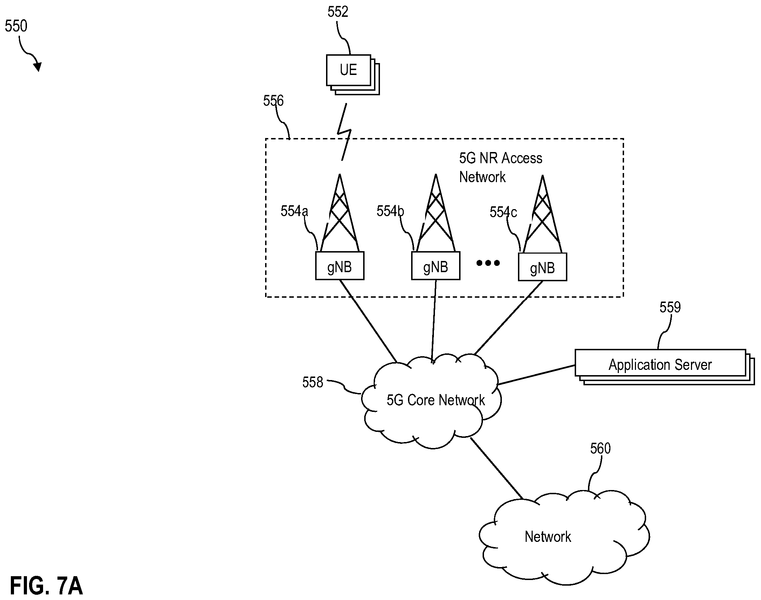

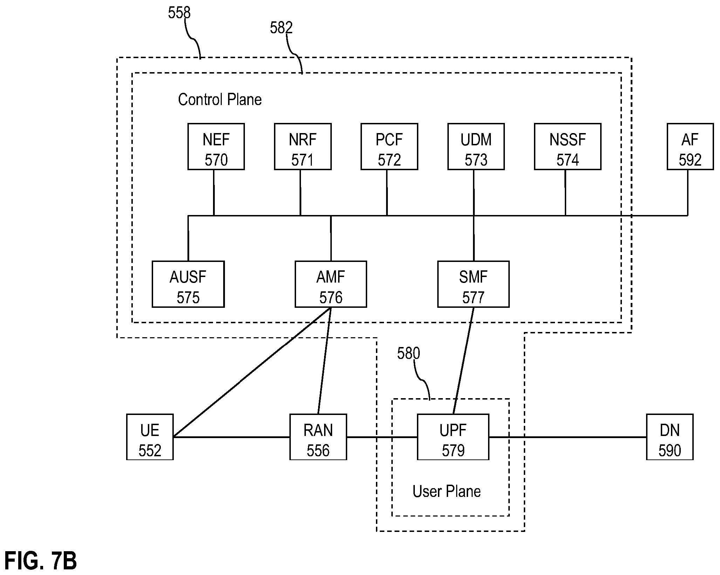

The core network 140 may provide various network functions, such as access and security management, subscriber authentication, quality of service management, routing and communication control, interconnection with other networks. The core network 140 may couple the cell sites 142 (e.g., access nodes (ANs)) to the network 150. The cell sites 142 may form a radio access network (RAN) providing wireless communications to user devices such as a user equipment (UE) 160 and/or customer network nodes such as a CPE node 130a (in the customer network 102-1) and a CPE node 130b (in the customer network 102-2) via respective wireless communication links 144. In some examples, the wireless communication links 144 may be established according to a 6G, a 5G, an LTE, a code division multiple access (CDMA), a global system for mobile communications (GSM) wireless telecommunication protocol, or some other suitable cellular communication protocol. In 5G and 6G technologies, an AN may be referred to as a next Generation Node B (gNB). In LTE technology, an AN may be referred to as an evolved Node B (eNB). In CDMA and GSM technology, an AN may be referred to as a base transceiver station (BTS) combined with a base station controller (BSC). In some contexts, an AN may be referred to as a cell tower. An example of a 5G network is discussed below with reference to FIGS. 7A and 7B. Generally, the core network 140 and the RAN formed by the cell sites 142 may be referred to as a telecommunications service provider network. The network 150 may include one or more public networks, one or more private networks, or a combination thereof. In some examples, the network 150 may include the Internet.

The telecommunications service provider may provide AI edge service management services to a certain business operator (a customer) (e.g., based on an SLA between the telecommunications service provider and the business operator). The business operator may have on-premises network nodes (e.g., a customer network node 138 and a plurality of CPE nodes 130c and 130d) in the customer network 102-3 in communication with the core network 140 of the telecommunications service provider via the network 150 (e.g., over a wireline communication link 104, such as coaxial cables, fiber optic cables, powerlines, etc.). The CPE nodes 130a and 130b (in wireless communications with the telecommunications service provider network) and CPE nodes 130c and 130d (in wireline communications with the telecommunications service provider network) may generally be referred to as CPE node 130. In some instances, the customer network node 138 may also operate as a CPE node 130 as will be discussed more fully below. At a high level, the core network node 110 may function as a master node to manage and/or orchestrate AI edge services (e.g., hosting of customers' AI models 114 and associated applications, such as agent applications 122) on the mobile edge AI nodes 120 (of the telecommunications service provider) and/or on the CPE nodes 130 (of the customer).

The core network node 110 and the mobile edge AI nodes 120 may include computer systems, data centers, and/or servers within the core network 100 (of the telecommunications service provider) where data can be transmitted, received, and processed. Similarly, the customer network node 138 and the CPE nodes 130 may include computer systems, data centers, and/or servers within the customer network 102 (e.g., on premises of the business operator) where data can be transmitted, received, and processed. In some instances, a CPE node 130 (e.g., the CPE nodes 130a and 130b) may be a small form factor, compact, and/or mobile computing device (e.g., a computer laptop, a computer workstation, etc.), which may be referred to as a small form factor device edge (SFFDE) node.

According to embodiments of the present disclosure, the core network node 110 may operate as a central location where all AI models 114 may be onboarded for hosting. For instance, the core network node 110 may include an AI edge service management application 112 including instructions stored in non-transitory memory of the core network node 110 and executable by a processor of the core network node 110. The AI edge service management application 112 may manage and orchestrate hosting services for AI models 114 of the customer using 1) the mobile edge AI nodes 120 of the telecommunications service provider (which may be referred to as telecommunications service provider hosting); 2) the CPE nodes 130 (on-premises network nodes) of the business operator (which may be referred to as business operator hosting); or 3) the mobile edge AI nodes 120 of the telecommunications service provider and the CPE nodes 130 (on-premises network nodes) of the business operator (which may be referred to as hybrid hosting). The AI models 114 are pre-trained models that are developed and trained by the customer.

For telecommunications service provider hosting, the core network node 110 and the mobile edge AI nodes 120 may form the AI edge service management platform. For business operator hosting, the core network node 110 and the CPE nodes 130 may form the AI edge service management platform, and the CPE nodes 130 may be considered as part (e.g., an edge system) of the telecommunications service provider network and may be provided with security protection therewith. For instance, all communications between the core network node 110 and the CPE nodes 130 and/or the customer network node 138 of the customer may be over respective VPN connections (e.g., 5G VPN connections).

As discussed above, the AI edge service management platform may streamline the process of deploying, managing, and operating AI models 114 and associated applications (e.g., the agent applications 122) for business operator hosting, telecommunication service provider hosting, and hybrid hosting. For instance, at a high level, the AI edge service management application 112 may receive, from the customer network node 138, a request to host at least one AI model 114. The at least one AI model 114 may be an ML model, a deep learning model, a generative AI model, an LLM, a RAG-based model, a multi-modal model, etc. The AI edge service management application 112 may generate APIs 116 for interacting with the at least one AI model 114 and an agent application 122 to facilitate interactions with the AI mode model 114 using the APIs 116. The AI edge service management application 112 may create an agent software package including the at least one AI model 114, the APIs 116, and the agent application 122. If the received request is for business operator hosting or hybrid hosting, the request may further indicate a list of CPE nodes 130 to be registered for hosting services for the at least one AI model 114. Accordingly, the AI edge service management application 112 may push (e.g., download and install) the agent software package to each of the registered CPE nodes 130. If the received request is for telecommunications service provider hosting or hybrid hosting, the AI edge service management application 112 may select mobile edge AI nodes 120 (e.g., based on the SLA) and may push (e.g., download and install) the agent software package to each of the selected mobile edge AI nodes 120.

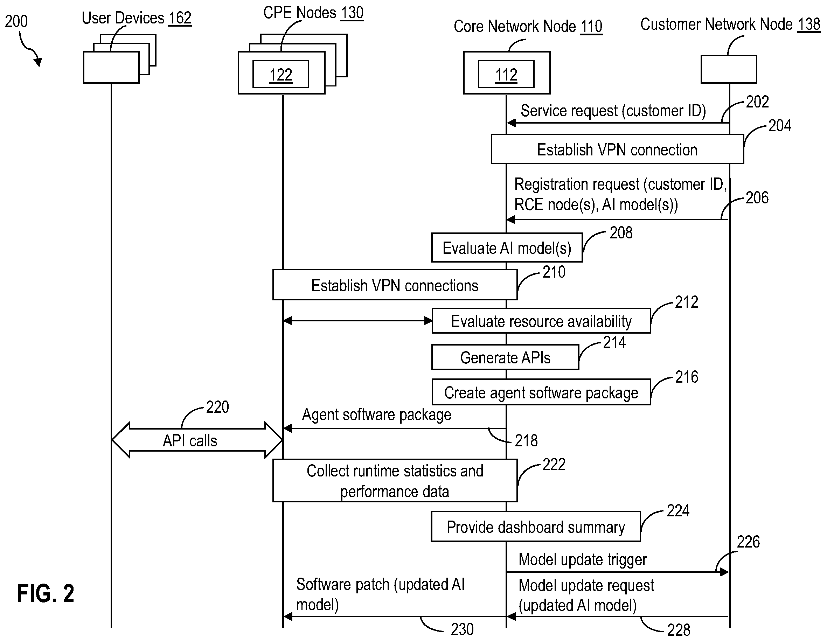

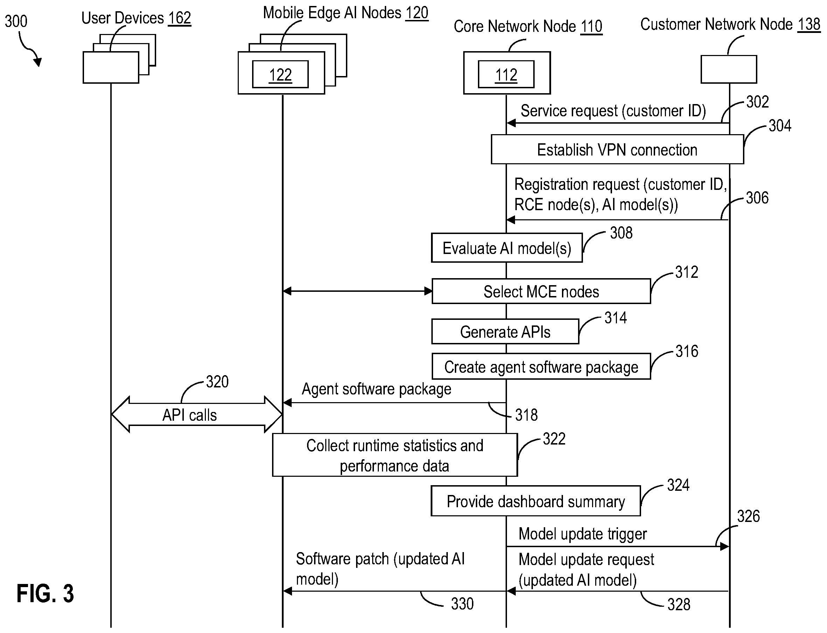

After a mobile edge AI node 120 or a CPE node 130 received and installed the agent software package, the mobile edge AI node 120 or the CPE node 130 may execute the agent application 122 to interact with the at least one AI model 114 and a user associated with the customer (e.g., via a user device 162 and/or a UE 160) according to corresponding APIs 116. The user device 162 may be a computer workstation, a computer laptop, a computer tablet, etc. The UE 160 may be a cell phone, a mobile phone, a smart phone, a personal digital assistant (PDA), an Internet of Things (IoT) device, a wearable computer, a headset computer, a laptop computer, a tablet computer, a notebook computer, embedded wireless modules, and/or other wirelessly equipped communication devices (whether or not user operated). The agent application 122 may also interact with a developer associated with the customer (e.g., via a developer user device 162) according to corresponding APIs 116. The developer may build, test, and debug the AI model 114 prior to production. The developer user device 162 may be a computer workstation, a computer laptop, a computer tablet, etc. In some instances, a user may invoke a different subset of the APIs 116 than a developer will be discussed more fully below with reference to FIGS. 2 and 3.

The AI edge service management application 112 may collect execution statistics and/or performance data associated with the at least one AI model 114 based on execution of the agent application 122 on each of the mobile edge AI nodes 120 and/or each of the CPE nodes 130. The AI edge service management application 112 may initiate various actions based on the runtime statistics and/or performance data. For example, in some embodiments, the AI edge service management application 112 may output the collected execution statistics and/or performance data to a dashboard (e.g., via a user interface (UI) which may be a web portal or a web application). In some embodiments, the AI edge service management application 112 may scale the number of mobile edge AI nodes 120 based on the runtime statistics. Alternatively, the customer may also scale the number of CPE nodes 130 based on the runtime statistics. In some embodiments, the AI edge service management application 112 may initiate an update of the AI model 114 based on the performance data failing to satisfy one or more criteria.

In some embodiments, the AI edge service management application 112 may push a subset of the AI models 114 (e.g., less than all of the AI models 114) and/or a subset of the APIs 116 (less than of the APIs 116) to a mobile edge AI node 120 or a CPE node 130. In other words, the AI edge service management application 112 may not include all of the AI models 114 and/or all of the APIs 116 in an agent software package. That is, the registered CPE nodes 130 and/or the mobile edge AI node 120 may run a mini-AI edge service management application platform software suite. In some embodiments, the AI edge service management application 112 may push different subsets of the AI models 114 and/or different subsets of the APIs 116 to different mobile edge AI nodes 120 and/or different CPE nodes 130 (e.g., for load balancing). Generally, the core network node 110 may operate as a master node in the AI edge service management platform (e.g., managing and/or orchestrating AI edge services on the mobile edge AI nodes 120 and/or the CPE nodes 130), and the mobile edge AI nodes 120 and/or CPE nodes 130 may operate as participant nodes in the AI edge service management platform. In some instances, the core network node 110 may also perform the functions of a mobile edge AI node 120 (e.g., executing an agent application 122 and interacting with the AI models 114, users, and developers using the APIs 116). That is, the core network node 110 can also support cloud computing tasks. For instance, heavy computing tasks and/or non-latency-sensitive with low transport tasks can be sent to the core network node for processing. In some instances, the customer network node 138 may also perform the functions of a CPE node 130 (e.g., executing an agent application 122 and interacting with the AI models 114, users, and developers using the APIs 116). Mechanisms for providing AI edge service management will be discussed more fully below with reference to FIGS. 2-6.

FIG. 1 is merely an example of components of a network system 100, and variations are contemplated to be within the scope of the present disclosure. In some embodiments, the network system 100 may include other components not illustrated in FIG. 1. In some embodiments, the network system 100 may not include every component illustrated in FIG. 1. In some embodiments, the components and connections may be implemented with different connections than those illustrated in FIG. 1. For example, in some instances, the telecommunications service provider may serve multiple business operators, each having one or more business sites with on-premises network nodes (e.g., the CPE nodes 130 and/or customer network node 138). To support multi-tenant or separation between the AI edge service hosting for the different business operators, the mobile edge AI nodes 120 may use confidential computing hardware (e.g., computing isolation technology built into the GPU(s), CPU(s), and/or memory). Additionally or alternatively, the core network 140 may be deployed with redundancy (e.g., the AI edge service management application 112 (that onboards all AI models 114) may be deployed at multiple locations to provide failover support and recovery). Such and other embodiments are contemplated to be within the scope of the present disclosure.

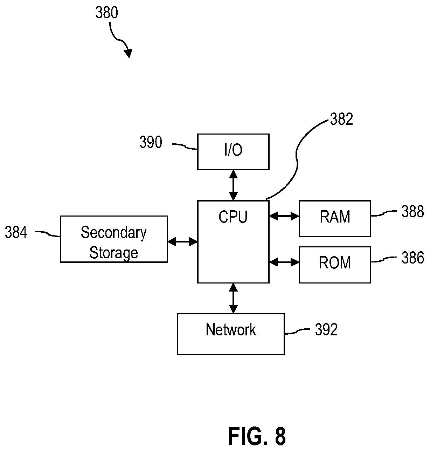

Turning now to FIG. 2, a method 200 of providing AI edge service management is described. The method 200 illustrates business operator hosting on an AI edge service management platform provided by a telecommunications service provider. The method 200 illustrates operations performed by various components of the network system 100. Specifically, the components include the core network node 110, the CPE nodes 130, the customer network node 138, and the user devices 162. However, it is contemplated that other component(s) of the network system 100 may be involved in performing the operations of the method 200. In some embodiments, each of the core network node 110, the CPE nodes 130, the customer network node 138, and the user devices 162 may implement the operations of the method 200 using a computer system with components as shown in FIG. 8. As illustrated, FIG. 2 includes a number of enumerated operations, but embodiments of the operations in FIG. 2 may include additional operations before, after, and in between the enumerated operations. In some embodiments, one or more of the enumerated operations may be omitted or performed in a different order.

The method 200 may begin after an SLA between a business operator and a telecommunications service provider for providing AI edge service management is signed. The SLA may include various information, for example, including, but is not limited to, the scope of services (e.g., edge computing, network connectivity, software support, AI model evaluation, AI model performance monitoring, AI model performance data and execution statistics collection, dashboard report, AI model update trigger, etc.), security and compliance requirements, types of CPE nodes 130 that the business operator may provide, hardware and/or functions of the CPE nodes 130 that may or may not be accessed and/or managed by the telecommunications service provider, types of mobile edge AI nodes 120 that the telecommunications service provider may provide to host AI edge services for the business operator, and technical support. The SLA may also include a business ID (or customer ID) assigned to the business operator. The SLA may further include API authorization keys for users and/or developers to access the APIs. For ease of illustration, the method 200 is discussed in the context of hosting one AI model 114 for one customer. However, the method 200 can be used for hosting any suitable number of AI models 114 (e.g., 2, 3, 4 or more) of any suitable number of customers (e.g., 2, 3, 4, 5, 6, 7, 8 or more).

At operation 202, a customer network node 138 associated with a customer network 102 may transmit, and an AI edge service management application 112 executing on a core network node 110 may receive, a service request for AI edge service management. For instance, the service request may indicate the customer ID (or business ID) that is assigned to the business operator (e.g., as part of the SLA). At operation 204, the core network node 110 may establish a VPN connection (or channel) with the customer network node 138 for secure communications with the customer network node 138. For instance, upon the AI edge service management application 112 receiving the service request at operation 202, the AI edge service management application 112 may initiate a download and an installation of a VPN software on the customer network node 138, and the customer network node 138 may establish the VPN connection with the core network node 110 using the installed VPN software. In some examples, the VPN connection may be a 5G VPN connection.

At operation 206, after the VPN connection is established, the customer network node 138 may transmit, and the AI edge service management application 112 may receive, via the VPN connection, a registration request to register an AI model 114 (e.g., developed and/or trained by the business operator) and a list of CPE nodes 130 in the customer network 102 for hosting the AI model 114. The registration request may include the customer ID, location information of the CPE nodes 130, and information associated with the AI model 114. The location information of the CPE nodes 130 may be in the form of uniform resource locators (URLs) (e.g., for CPE nodes 130 that are servers, computers, etc.) and/or subscriber identity module (SIM) number or phone number (e.g., for CPE nodes 130 that are SFFDEs nodes).

The information associated with the AI model 114 (in the registration request) may include model architecture information and trained model parameters (e.g., weights and/or biases) of the AI model 114. As an example, the AI model 114 may include a plurality of layers, for example, an input layer, followed by one or more hidden layers and an output layer. Each layer may include a set of weights and/or biases that can transform inputs received from a previous layer and the resulting outputs can be passed to the next layer. The weights and/or biases in each layer can be trained and adapted, for example, to perform classification, prediction, etc., to assist operations of the business operator. The AI model 114 may be trained by developers and/or data scientists of the business operator (e.g., based on a backpropagation process). The backpropagation process may perform a backward pass through the layers in the AI model 114 while adjusting the weights and/or biases at each layer, for example, using a gradient method. As such, the model architecture information may include information, such as the arrangement of the layers (e.g., the input layer, the hidden layers, and the output layer), neurons (e.g., the computational units), and connections, defining the flow and processing of data in the AI model 114. The model parameters may include the trained weights and/or biases associated with the neurons in the layers.

Additionally, the registration request may indicate knowledgebase(s) (e.g., database(s), links to database(s)) that the AI model 114 may use to respond to users' questions (e.g., when the AI model 114 is an LLM or a RAG-based model). Additionally or alternatively, the registration request may indicate software libraries for preprocessing inputs to the AI model 114 (e.g., to format the inputs into certain formats for processing by the AI model 114 or improve the quality of the inputs, such as image quality, audio quality, or text readability) and/or post-processing outputs from the AI model 114 (e.g., for post analysis). Additionally or alternatively, the registration request may indicate test cases including inputs and corresponding reference (or target) outputs for evaluation of the AI model 114 as will be discussed more fully below.

At operation 208, upon the AI edge service management application 112 receiving the registration request, the AI edge service management application 112 may evaluate the AI model 114 in terms of resource requirements and performance. For instance, in some examples, the AI edge service management platform may quantize the model parameters of the AI model 114 (e.g., based on a predetermined quantization scheme to limit the amount of processing and/or memory resources for hosting the AI model). The AI edge service management application 112 may evaluate the performance of the quantized AI model 114 (e.g., against the test cases including input sample data and corresponding target outputs received as part of the registration request at operation 206).

To evaluate the quantized AI model 114, the AI edge service management application 112 may provide the input sample data to the quantized AI model 114 for processing and calculate a difference measure (or error measure) between the output of the AI model 114 and the target or reference output. If the evaluation of the AI model 114 is unsuccessful (e.g., when the difference measure greater than a certain threshold), the AI edge service management application 112 may not proceed with hosting the AI model 114. In some instances, upon an unsuccessful evaluation, the AI edge service management application 112 may transmit, to the customer network node 138, an error status indicating the evaluation of the quantized AI model 114 failed and may provide the quantization scheme that was applied to the AI model 114 and the failure reasons. In some instances, the customer may retrain the AI model 114 according to the quantization scheme and resubmit the retained AI model 114 for hosting.

If, however, the evaluation of the AI model 114 is successful, the AI edge service management application 112 may proceed to evaluate the resource availability at each of the registered CPE nodes 130. For instance, at operation 210, the core network node 110 may establish a VPN connection with each of the CPE nodes 130. Similar to the VPN connection establishment at operation 204, the AI edge service management application 112 may initiate a download and an installation of a VPN software on each CPE node 130, and the CPE node 130 may establish the VPN connection with the core network node 110 using the installed VPN software. At operation 212, the AI edge service management application 112 may evaluate the availability of resources (e.g., the number and/or types of CPUs, the number and/or types of GPUs, and/or the amount of memory by memory types) at each of the CPE nodes 130 to ensure that the respective CPE node 130 has sufficient resources to host operations associated with the AI model 114. In some instances, the registration request received at operation 206 may further indicate the resources (e.g., the number and/or types of CPUs, the number and/or types of GPUs, and/or the amount of memory by memory types) that are available at the CPE nodes 130, and the AI edge service management application 112 may verify that the indicated resources are indeed available at each of those CPE nodes 130 and are sufficient for hosting operations associated with the AI model 114. If any CPE node 130 fails the resource availability evaluation, the AI edge service management application 112 may not configure that particular failed CPE node 112 to host the AI model 114. That is, the AI edge service management application 112 may only host the AI model 114 on a CPE node 130 if the AI model 114 passed the AI model evaluation and the CPE node 130 passed the resource availability evaluation. In some instances, the AI edge service management application 112 may indicate the CPE node 130 that failed the resource availability evaluation to the customer network node 138.

As an example, all of the CPE nodes 130 passed the resource availability evaluation. Thus, at operation 214, the AI edge service management application 112 may generate APIs 116 for interacting with the AI model 114 based on rules associated with the customer ID. The rules may be based on the SLA (between the telecommunications service provider and the customer). For instance, the AI edge service management platform may provide a set of standardized APIs 116 for AI model interactions, the SLA may indicate a subset of the standardized APIs 116, and the rules may be defined based on the subset of APIs 116. Accordingly, the AI edge service management application 112 may generate the subset of the standardized APIs 116 (as agreed in the SLA). In some instances, the SLA may also indicate key information (e.g., API keys for authorizing individual users, individual developers, and/or user groups) associated with devices (e.g., UEs 160 and/or user devices 162) allowable for accessing and interacting with the Al model 114 hosted at the CPE nodes 130. Accordingly, the AI edge service management application 112 may generate the APIs 116 further based on the key information. That is, the SLA may be embedded in the APIs 116.

The APIs 116 may be used by an agent application 122 to interact with the AI model 114 and users associated with the customer (e.g., via user devices 162 and/or UEs 160). The APIs 116 may also be used by the agent application 122 to interact with the AI model 114 and developers associated with the customer (e.g., via developer user devices 162). For instance, a user may use the AI model 114 to perform various functions (e.g., data analysis, automation, recommendation, prediction, etc.) to assist operations of the customer. A developer may test the AI model 114 prior to production and debug the AI model 114 when certain errors or bugs are reported. In some examples, role-based management may be applied to the APIs 116. For instance, users and developers may have access to different APIs 116 and may access the AI model 114 using different API authorization keys. As an example, one API 116 may invoke computations of the AI model 114. For instance, the API 116 may include input parameters, such as an API authorization key, a model identifier identifying the AI model 114, a version number of the AI model 114, input data (to be processed by the AI model 114), etc. The API authorization key can be a user API key, a developer AI key, a group user API key, or a group developer API key. As another example, one API 116 may be a callback API for the AI model 114 to return output data generated by the AI model 114. As a further example, the APIs 116 may include application-specific APIs 116, such as NLP APIs, computer vision APIs, speech AI APIs, predictive AI APIs, and AI model debug APIs (e.g., log and save data at certain code points of the AI model 114 processing for debugging purposes).

In some examples, the CPE nodes 130 (for hosting AI applications) may be located in various zones (edge AI application server zones) and thus, the AI edge service management application 112 may also generate APIs 116 for mapping customer remote requests to the edge AI application server zone that is closest to the customers in terms of latency. For instance, the AI edge service management application 112 may issue APIs for remote requests based on computation of the shortest routing path towards a particular edge AI application server zone. In some examples, when a CPE node 130 registers with the core network node 110, the CPE node 130 may also provide some device groups that may be served by the CPE node 130 and request some common APIs 116 for those device groups. The business contract (the SLA) may code or specify different service features and agreements associated with those APIs.

Next, at operation 216, the AI edge service management application 112 may create an agent software package including information associated with the AI model 114 (e.g., the model architecture, the model parameters (or quantized parameters), knowledgebases, software libraries, etc.), the APIs 116, and an agent application 122 for facilitating interactions with the AI model 114 based on the APIs 116. In some instances, the agent software package may include the APIs 116 separate from the agent application 122, where the APIs 116 may be installed as function call pointers in the agent application 122 or a dynamic link library. In other instances, the agent software package may include the APIs 116 integrated as part of the agent application 122. Generally, the agent software package may package the APIs 116 and the agent application 122 in any suitable way. In some instances, the agent software package may also include containers or pods (e.g., to provide a virtualized computing environment for executing the agent application 122 and operations of the AI model 114). At operation 218, the AI edge service management application 112 may initiate a download and an installation of the agent software package on each of the CPE nodes 130.

At operation 220, after a CPE node 130 received and installed the agent software package, the CPE node 130 may execute the agent application 122 to interact with users (via the user devices 162) in using the AI model 114 via calls to the APIs 116. For instance, the agent application 122 may receive a request (or input data) from a user of the user device 162. The agent application 122 may initiate the AI model 114 to process the user's request or input data. After the AI model 114 processed the user's request or input data, the AI model 114 may provide an output (e.g., a response or output data). The agent application 122 provide the output to the user. In some instances, the agent application 122 may preprocess the user's request or input data and may invoke the AI model 114 to process the preprocessed data. In some instances, the agent application 122 may postprocess the AI model 114's output and may provide the postprocessed output to the user. As such, the agent application 122 may operate as a wrapper function to support operations of the AI model 114. Generally, all interactions between the agent application 122 and the AI model 114 or between the agent application 122 and the users may be based on the APIs 116.

At operation 222, the AI edge service management application 112 may coordinate with the CPE nodes 130 to collect runtime statistics (e.g., history of AI model executions, CPU usage, GPU usage, memory usage, etc.) and/or performance data (e.g., accuracies of the AI model) associated with the AI model 114 based on the execution of the agent application 122 on each CPE node 130. For instance, the agent application 122 executing on each CPE node 130 may report those execution statistics and/or performance data to the AI edge service management application 112. The AI edge service management application 112 may initiate various actions based on the collected runtime statistics and/or performance data.

For instance, at operation 224, the AI edge service management application 112 may output the runtime statistics and/or performance data associated with the AI model 114 to a dashboard via a UI (e.g., a web portal or a web application). As an example, a summary including GPU usage, CPU usage, and memory usage for each CPE node 130 may be displayed on the dashboard. An administrator of the customer may monitor the dashboard and may determine whether to add one or more additional CPE nodes 130 to host the AI model 114 (e.g., when the GPU usage, CPU usage, and memory usage exceed certain thresholds) or remove one or more of the CPE nodes 130 from hosting the AI model 114 (e.g., when the GPU usage, CPU usage, and memory usage exceed certain thresholds). In an example, to add an additional CPE node 130, the customer network node 138 may transmit a registration request indicating the customer ID, the additional CPE node 130, and the AI model 114 to the AI edge service management application 112 (e.g., over the VPN connection between the customer network node 138 and the core network node 110) similar to the operation 206. The AI edge service management application 112 may deploy the AI model 114 and associated applications (e.g., the agent application 122) using similar mechanisms as discussed above at operations 210 to 218. In an example, to remove a CPE node 130 from hosting the AI model 114, the customer network node 138 may transmit a de-registration request indicating the customer ID, the CPE node 130 for removal, and the AI model 114 to the AI edge service management application 112 (e.g., over the VPN connection between the customer network node 138 and the core network node 110). The AI edge service management application 112 may transmit, to the CPE node 130 for removal, an instruction to terminate hosting of the AI model 114 and perform clean up (e.g., uninstall the agent application 122 and release any memory allocated for the AI model 114 or associated computations, etc.).

In some instances, the AI edge service management application 112 may also initiate an update of the AI model 114 based on the collected performance data. For instance, the AI edge service management application 112 may monitor and analyze the performance data to determine whether there is any degradation in the performance of the AI model 114. The AI model performance can degrade due to various reasons (e.g., data drift where the distribution of the input data changes, model drift where the input and target output relationship of the AI model 114 changes due to evolving user behaviors, etc.). Generally, the AI edge service management application 114 may use any suitable techniques or algorithms (e.g., statistical-based, metric-based, etc.) to monitor AI model performance degradation. In some examples, users of the AI model 114 may be allowed to provide feedback about output provided by the AI model 114, and thus the AI edge service management application 112 may also detect performance degradation based on user feedback. Once the model degradation is detected by AI edge service management application 112, the AI edge service management application 112 may notify the developer. The developer may retrain the model offline and upload the updated AI model 114 to replace the original AI model 114.

Upon the AI edge service management application 112 determining that the performance data associated with the AI model 114 fails to satisfy one or more criteria (e.g., a performance degradation, for example, due to data and/or model drift), the AI edge service management application 112 may initiate an update of the AI model 114. For instance, at operation 226, the AI edge service management application 112 may transmit, to the customer network node 138, a model update trigger (e.g., an instruction to update and retrain the AI model 114). In some instances, the model update trigger may include the performance data (e.g., including data logs of inputs and outputs of the AI model 114) and/or indications where degradation is detected in the performance data. The AI edge service management application 112 may issue a version update to the nodes that support this AI model 114. The updated AI model 114 may be automatically pushed down to the edge nodes during off peak hours.

Upon the customer network node 138 receiving the model update trigger, developer(s) or data scientist(s) of the customer may retrain and update the AI model 114 offline. The retraining of the AI model 114 may result in updated model parameters for the AI model 114. At operation 228, the customer network node 138 may transmit, and the AI edge service management application 112 may receive, a model update request. The model update request may include the customer ID, the updated AI model 114 with the updated parameters and updated version number. In some instances, the model update request may also include an indication of the registered CPE nodes 130 to be updated with the updated AI model 114. In other instances, the AI edge service management application 114 may maintain and track the list of CPE nodes 130 previously registered for hosting the AI model 114. Upon the AI edge service management application 112 receiving the updated AI model 114, the AI edge service management application 112 may deploy the updated AI model 114 to each CPE node 130 (that currently are hosting the AI model 114). For instance, at operation 230, the AI edge service management application 112 may transmit, to each CPE node 130, a software patch including the updated AI model 114. That is, the customer may deploy the updated AI model 114 once, and the AI edge service management application 112 may propagate the updated AI model 114 to each CPE node 130.

While the method 200 illustrates users interacting with the AI model 114 via the user devices 162, some users may interact with the AI model 114 via UEs 160. Additionally, developers of the customer may also interact with the AI model 114, for example, via developer user devices 162. Further, while the method 200 illustrates the customer network node 138 registering the CPE nodes 130 for hosting the AI model 114, some CPE node 130 (e.g., SFFDE nodes) may register themselves to host the AI model 114. For instance, the telecommunications service provider may assign a customer group ID (business group ID) to the customer in addition to the customer ID. The SLA (between the telecommunications service provider and the customer) may include the customer group ID and a mapping between the customer group ID and a list of device IDs identifying CPE nodes 130 that are allowed to register themselves to host AI models 114. Accordingly, in some embodiments, a CPE node 130 may transmit, to the AI edge service management application 112, a registration request to register the CPE node 130 itself for hosting an AI model 114. The registration request may include the customer group ID, an ID identifying the CPE node 130, and information associated with the AI model 114. Upon the AI edge service management application 112 receiving the registration request, the AI edge service management application 112 may compare the CPE node 130's ID to the list of ID of device IDs mapped to the customer ID. Upon the AI edge service management application 112 determining a match between the CPE node 130's ID and a device ID in the list, the AI edge service management application 112 may proceed to configure the CPE node 130 to host the AI model 114 (e.g., using similar mechanisms as discussed above at operations 210-218).

In some embodiments, for the customer network node 138 and/or the CPE nodes 130 to communicate with the AI edge service management application 112, the customer network node 138 and/or the CPE nodes 130 may have to log onto a server (e.g., the core network node) and provide a password. In some instances, the telecommunications service provider may issue certain keys (e.g., a Ceph secret key and a Ceph access key) for the customer network node 138 and/or the CPE nodes 130 to use for logging on to the server in addition to the password. In some embodiments, the quantizing of the AI model 114 at operation 208 may be optional.

Turning now to FIG. 3, a method 300 of providing AI edge service management is described. The method 300 illustrates a different embodiment than the method 200 where a telecommunications service provider may provide an AI edge service management platform and host AI edge applications using network nodes (e.g., MCE nodes 120) of the telecommunications service provider. The method 300 illustrates operations performed by various components of the network system 100. Specifically, the components include the core network node 110, the mobile edge AI nodes 120, the customer network node 138, and the user device 162. However, it is contemplated that other component(s) of the network system 100 may be involved in performing the operations of the method 300. In some embodiments, each of the core network node 110, the mobile edge AI nodes 120, the customer network node 138, and the user device 162 may implement the operations of the method 300 using a computer system with components as shown in FIG. 8. As illustrated, FIG. 3 includes a number of enumerated operations, but embodiments of the operations in FIG. 3 may include additional operations before, after, and in between the enumerated operations. In some embodiments, one or more of the enumerated operations may be omitted or performed in a different order.

Similar to the method 200, the method 300 may begin after an SLA between a business operator and a telecommunications service provider for providing AI edge service management is signed. The SLA may be substantially similar as the SLA discussed above with reference to FIG. 2. However, the SLA may further specify the types of mobile edge AI nodes 120 (e.g., processing capacity including the number of GPUs, the number of CPUs, types of memory, memory capacity, etc.). The SLA may also specify the geographical locations, time zones, latencies, and/or throughputs requirements for the mobile edge AI nodes 120 to host AI models 114 of the business operator. For instance, the geographical locations and time zones may be specified based on the locations and/or time zones from which the business operator may operate.

Generally speaking, the method 300 includes features similar to method 200 in many respects. For example, operations 302, 304, 306, 308, 314, 316, 318, 320, 322, 324, 326, 328, and 330 are similar to operations 202, 204, 206, 208, 214, 216, 218, 220, 222, 224, 226, 228, and 230, respectively. Accordingly, for brevity, details of those operations will not be repeated here.

At operation 312, after the AI edge service management application 112 received a registration request from the customer network node to host the AI model 114 at operation 306 and evaluated the AI model 114 at operation 308 with a pass, the AI edge service management application 112 may select mobile edge AI nodes 120 to host the AI model 114. The selection may be based on various factors, such as geographical regions, time zones, latencies, throughputs, and/or resource constraints (e.g., related to processors, memory, power, connections, etc.) associated with the respective mobile edge AI nodes 120. In some examples, the selection factors may be based on the SLA between the telecommunications service provider and the customer (business operator). In some instances, as part of the selection at operation 312, the AI edge service management application 112 may evaluate the resource availability (e.g., processing and/or memory resource availability) at the mobile edge AI nodes 120. As can be seen, the method 300 does not include VPN connection establishment with the mobile edge AI nodes 120. This is because the mobile edge AI nodes 120 are part of a core network 140 of the telecommunications service provider and may use the security that is provided within the code network 140.

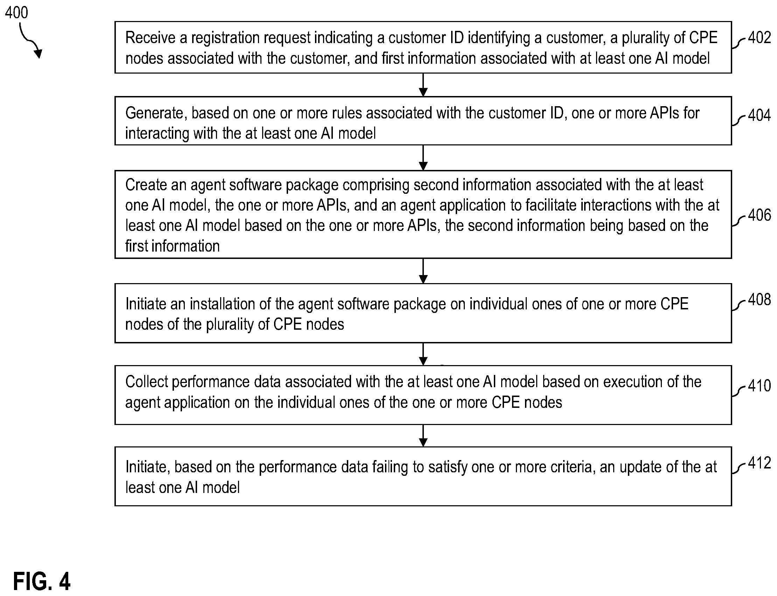

Turning now to FIG. 4, a method 400 is described. In an embodiment, the method 400 is a method of providing AI edge service management to a customer (business operator), where the customer may host their own AI models 114 on their own network nodes (e.g., the CPE nodes 130). The method 400 may be implemented by an AI edge service management application 112 executing on a core network node 110 of a telecommunications service provider. The method 400 may include similar mechanisms as discussed above with reference to FIGS. 1-2. In some embodiments, the method 400 may be implemented using a computer system with components as shown in FIG. 8. As illustrated, FIG. 4 includes a number of enumerated operations, but embodiments of the operations in FIG. 4 may include additional operations before, after, and in between the enumerated operations. In some embodiments, one or more of the enumerated operations may be omitted or performed in a different order.

At block 402, the AI edge service management application 112 receives a registration request indicating a customer ID identifying a customer, a plurality of CPE nodes 130 associated with the customer, and first information associated with at least one AI model 114. In an embodiment, the at least one AI model 114 includes at least one of an ML model, a deep learning model, a generative AI model, an LLM, a RAG-based model, or a multi-modal model. In an embodiment, the first information associated with the at least one AI model 114 includes at least one of model architecture information, model parameters, a knowledgebase, a software library (e.g., for preprocessing inputs to the at least one AI model and/or post-processing outputs of the at least one AI model 114), or a test case including input sample data and a corresponding output. In an embodiment, the registration request may be received from a customer network node 138 associated with the customer over a VPN connection (e.g., a 5G VPN) between the core network node 110 and the customer network node 138.

At block 404, the AI edge service management application 112 generates, based on one or more rules associated with the customer ID, one or more APIs 116 for interacting with the at least one AI model 114. In an embodiment, the one or more rules for generating the APIs include API authorization key information. The rules may refer to logics or code based on conditions defined in an SLA between the customer and the telecommunications service provider. For instance, the API authorization key information may include user API keys for authorizing individual users, group user API keys for authorizing a group of users, developer API keys for authorizing individual developers, group developer API keys for authorizing a group of developers. At block 406, the AI edge service management application 112 creates an agent software package comprising second information associated with the at least one AI model 114, the one or more APIs 116, and an agent application 122 to facilitate interactions with the at least one AI model 114 based on the one or more APIs 116, the second information being based on the first information.

At block 408, the AI edge service management application 112 initiates an installation of the agent software package on individual ones of one or more CPE nodes 130 of the plurality of CPE nodes 130. In an embodiment, as part of initiating the installation of the agent software package, the AI edge service management application 112 transmits, to each individual one of the one or more CPE nodes 130, the agent software package over a VPN connection between the core network node 110 (of the telecommunications service provider) and the respective CPE node 130. In an embodiment, as part of initiating the installation of the agent software package, the AI edge service management application 112 transmits the agent software package to an individual one of the one or more CPE nodes 130 via a wireless communication link 144. In an embodiment, as part of initiating the installation of the agent software package, the AI edge service management application 112 transmits the agent software package to an individual one of the one or more CPE nodes 130 via a wireline communication link 104.

At block 410, the AI edge service management application 112 collects performance data associated with the at least one AI model 114 based on execution of the agent application 122 on the individual ones of the one or more CPE nodes 130. At block 412, the AI edge service management application 112 initiates, based on the performance data failing to satisfy one or more criteria, an update of the at least one AI model 114. For instance, the AI edge service management application 112 detects, based on the performance data, at least one of a data drift or a model drift associated with the at least one AI model 114 and determines that the performance data fails to satisfy the one or more criteria based on the detection of the at least one of the data drift or the model drift associated with the at least one AI model 114. In an embodiment, as part of initiating the update of the at least one AI model 114, the AI edge service management application 112 transmits, to a network node (e.g., the customer network node 138) associated with the customer, a first instruction to update (or retrain) the at least one AI model 114, where the first instruction includes the performance data (e.g., a data log). The AI edge service management application 112 further receives, in response to the first instruction, an updated AI model 114 (including updated model parameters). The AI edge service management application 112 further transmits, to an individual one of the one or more CPE nodes 130, an indication of the updated AI model 114 (e.g., in the form of a software patch).

In an embodiment, the AI edge service management application 112 further evaluates a resource availability at individual ones of the plurality of CPE nodes 130 for hosting the at least one AI model 114, and the initiating the installation of the agent software package on the individual ones of the one or more CPE nodes 130 at block 408 is based on the resource availability at the individual ones of the one or more CPE nodes 130 satisfying one or more second criteria (e.g., a certain threshold number of GPUs, a certain threshold of CPUs, a certain threshold cache size, a certain threshold amount of memory, etc.).

In an embodiment, the AI edge service management application 112 further applies a quantization scheme to the at least one AI model 114 to generate a quantized AI model 114. The AI edge service management application 112 further evaluates a performance of the quantized AI model 114 against the test case (included in the first information associated with the at least one AI model 114 received as part of the registration request at block 402). For instance, the AI edge service management application 112 may provide the input sample data to the quantized AI model 114 for processing and calculate a difference measure (or error measure) between the output of the AI model 114 and the target output. In such an embodiment, the initiating the installation of the agent software package on the one or more CPE nodes 130 at block 408 is based on the performance of the quantized AI model 114 satisfying one or more third criteria (e.g., the difference measure satisfying a certain threshold) Further, the second information associated with the at least one AI model 114 in the agent software package created at block 406 is based on the quantized AI model 114. For instance, the second information may be substantially the same as the first information (in the registration request received at block 402) but may include the quantized model parameters instead of the model parameters in the first information.

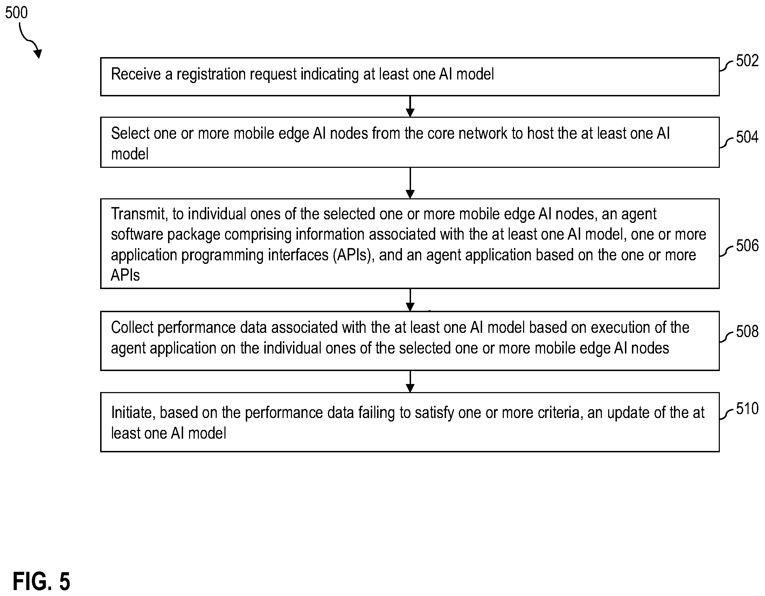

Turning now to FIG. 5, a method 500 is described. In an embodiment, the method 500 is a method for a telecommunications service provider to provide AI edge service management to a customer (business operator) by hosting the customer's AI models 114 at mobile edge AI nodes 120 of the telecommunications service provider. The method 500 may be implemented by an AI edge service management application 112 executing on a core network node 110 in a core network 140 of a telecommunications service provider. The method 500 may include similar mechanisms as discussed above with reference to FIGS. 1-4. In some embodiments, the method 500 may be implemented using a computer system with components as shown in FIG. 8. As illustrated, FIG. 5 includes a number of enumerated operations, but embodiments of the operations in FIG. 5 may include additional operations before, after, and in between the enumerated operations. In some embodiments, one or more of the enumerated operations may be omitted or performed in a different order.

At block 502, the AI edge service management application 112 receives a request indicating at least one AI model 114, (e.g., from a first network node associated with a customer network 102, where the first network node may correspond to the customer network node 138). At block 504, the AI edge service management application 112 selects one or more mobile edge AI nodes 120) from the core network 140 to host the at least one AI model 114. In an embodiment, the selecting the one or more mobile edge AI nodes 120 from the core network 140 is based on at least one of geographical regions, time zones, latencies, throughputs, or resource constraints associated with the one or more mobile edge AI nodes 120. At block 506, the AI edge service management application 112 transmits, individual ones of the selected one or more mobile edge AI nodes 120, an agent software package including information associated with the at least one AI model 114, one or more APIs 116, and an agent application 122. At block 508, the AI edge service management application 112 collects performance data associated with the at least one AI model 114 based on execution of the agent application 122 on the individual ones of the one or more mobile edge AI nodes 120.

At block 510, the AI edge service management application 112 initiates, based on the performance data failing to satisfy one or more criteria, an update of the at least one AI model 114. For instance, the AI edge service management application 112 detects, based on the performance data, at least one of a data drift or a model drift associated with the at least one AI model 114 and determines that the performance data fails to satisfy the one or more criteria based on the detection of the at least one of the data drift or the model drift associated with the at least one AI model 114. In an embodiment, as part of initiating the update of the at least one AI model 114, the AI edge service management application 112 transmits, to a network node (e.g., the customer network node 138) associated with the customer, a first instruction to update (or retrain) the at least one AI model 114, where the first instruction includes the performance data (e.g., a data log). The AI edge service management application 112 further receives, in response to the first instruction, an updated AI model 114 (including updated model parameters). The AI edge service management application 112 further transmits, to an individual one of the one or more mobile edge AI nodes 120, an indication of the updated AI model 114 (e.g., in the form of a software patch).

In an embodiment, the AI edge service management application 112 further applies a (predetermined) quantization scheme to the at least one AI model 114 to generate a quantized AI model 114. The AI edge service management application 112 further evaluates a performance of the quantized AI model 114. against the test case (included in the first information associated with the at least one AI model 114 received as part of the registration request at block 402) using substantially similar mechanisms discussed above with reference to FIGS. 2 and 4. Further, the information associated with the at least one AI model 114 in the agent software package created at block 406 is based on the quantized AI model 114.

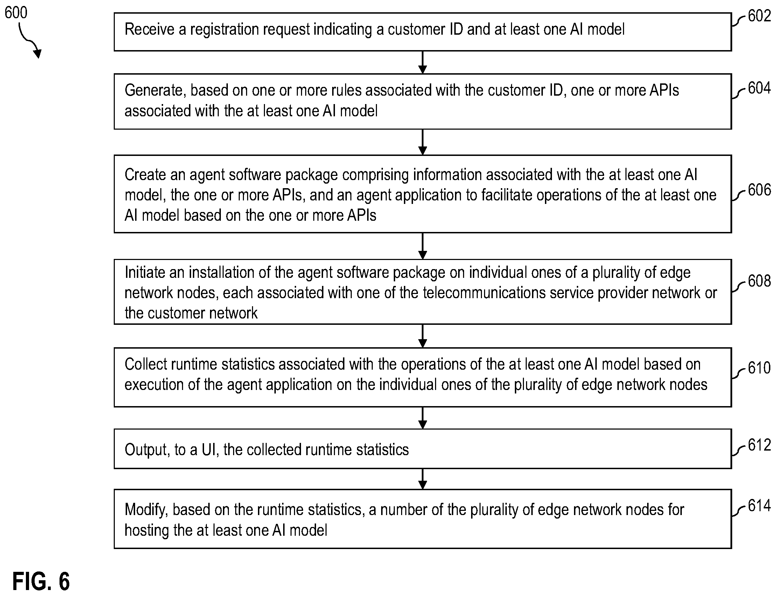

Turning now to FIG. 6, a method 600 is described. In an embodiment, the method 600 is a method for a telecommunications service provider to provide AI edge service management to a customer (business operator) by hosting customer's AI models 144 at mobile edge AI nodes 120 of the telecommunications service provider and CPE nodes 130 of the customer. The method 600 may be implemented by an AI edge service management application 112 executing on a core network node 110 in a core network 140 of a telecommunications service provider. The method 600 may include similar mechanisms as discussed above with reference to FIGS. 1-5. In some embodiments, the method 600 may be implemented using a computer system with components as shown in FIG. 8. As illustrated, FIG. 6 includes a number of enumerated operations, but embodiments of the operations in FIG. 6 may include additional operations before, after, and in between the enumerated operations. In some embodiments, one or more of the enumerated operations may be omitted or performed in a different order.

At block 602, the AI edge service management application 112 receives a registration request indicating a customer ID and at least one AI model 114 (e.g., from a first network node, such as the customer network node 138, associated with a customer network 102). At block 604, the AI edge service management application 112 generates, based on one or more rules associated with the customer ID, one or more APIs 116 associated with the at least one AI model 114. At block 606, the AI edge service management application 112 creates an agent software package including information associated with the at least one AI model 114, the one or more APIs 116, and an agent application 122 to facilitate operations of the at least one AI model 114 based on the one or more APIs 116.

At block 608, the AI edge service management application 112 initiates an installation of the agent software package on individual ones of a plurality of edge network nodes (e.g., the mobile edge AI nodes 120 and/or the CPE nodes 130), each associated with one of the telecommunications service provider network (e.g., the core network 140 and the RAN formed by the cell sites 142) or the customer network 102. At block 610, the AI edge service management application 112 collects runtime statistics associated with the operations of the at least one AI model 114 based on execution of the agent application 122 on the individual ones of plurality of edge network nodes. In an embodiment, the runtime statistics are associated with at least one of CPU usage, GPU usage, CPU usage, or memory usage associated with the operations of the at least one AI model 114 at the individual ones of the plurality of edge network nodes. At block 612, the AI edge service management application 112 outputs, via a UI (e.g., a web portal or a web application), the runtime statistics associated with the at least one AI model 114.

At block 614, the AI edge service management application 112 modifies, based on the runtime statistics, a number of the plurality of edge network nodes for hosting the at least one AI model 114. In an embodiment, the AI edge service management application 112 adds one more additional edge network nodes (e.g., mobile edge AI nodes 120) of the core network 140 to host the AI model 114 (e.g., when the GPU usage, CPU usage, and memory usage exceed certain thresholds) or remove one or more of the plurality of edge network nodes that are associated with the telecommunications service provider (e.g., when the GPU usage, CPU usage, and memory usage exceed certain thresholds). In an embodiment, the AI edge service management application 112 further receives, from a second network node (e.g., the customer network node 138) associated with the customer network 102, based on the runtime statistics, a node change request to remove one of the plurality of edge network nodes (e.g., a CPE node 130) associated with the customer network 102 or add an additional network node (e.g., a CPE node 130) associated with the customer network 102 for hosting the at least one AI model 114, and the modifying the number of the plurality of edge network nodes for hosting the at least one AI model 114 at block 612 is further based on the node change request. In some instances, the second network node may be the same as the first network node (from which the registration request is received at block 602). In other instances, the second network node may be different than the first network node.

In an embodiment, the registration request received at block 602 further includes an indication of one or more CPE nodes 130 associated with the customer network 102, and the plurality of edge network nodes includes the one or more CPE nodes 130 indicated by the registration request received at block 602. In an embodiment, the AI edge service management application 112 further receives, from a third network node (e.g., a CPE node 130, an SFFDE node) associated with the customer network 102, a second registration request to register the third network node for hosting the at least one AI model 114, where the second registration request includes a customer group ID and an ID of the third network node. The AI edge service management application 112 further initiates a second installation of the agent software package on the third network node based on a comparison between the ID of the third network node and a predetermined list of device IDs associated with the customer group ID. In an example, the customer group ID may be assigned by the telecommunications service provider to the customer based on an SLA between the telecommunications service provider and the customer, and the predetermine list of device IDs may be specified in the SLA. In some instances, the third network node may be the same as the first network node (from which the registration request is received at block 602). In other instances, the third network node may be different than the first network node.

Turning now to FIG. 7A, an exemplary communication system 550 is described. Typically the communication system 550 includes a number of access nodes 554 that are configured to provide coverage in which UEs 552 such as cell phones, tablet computers, machine-type-communication devices, tracking devices, embedded wireless modules, and/or other wirelessly equipped communication devices (whether or not user operated), can operate. The access nodes 554 may be said to establish an access network 556. The access network 556 may be referred to as a RAN in some contexts. In a 5G technology generation an access node 554 may be referred to as a next Generation Node B (gNB). In 4G technology (e.g., LTE technology) an access node 554 may be referred to as an evolved Node B (eNB). In 3G technology (e.g., code division multiple access (CDMA) and global system for mobile communication (GSM)) an access node 554 may be referred to as a base transceiver station (BTS) combined with a base station controller (BSC). In some contexts, the access node 554 may be referred to as a cell site or a cell tower. In some implementations, a picocell may provide some of the functionality of an access node 554, albeit with a constrained coverage area. Each of these different embodiments of an access node 554 may be considered to provide roughly similar functions in the different technology generations.

In an embodiment, the access network 556 comprises a first access node 554a, a second access node 554b, and a third access node 554c. It is understood that the access network 556 may include any number of access nodes 554. Further, each access node 554 could be coupled with a core network 558 that provides connectivity with various application servers 559 and/or a network 560. In an embodiment, at least some of the application servers 559 may be located close to the network edge (e.g., geographically close to the UE 552 and the end user) to deliver so-called "edge computing." The network 560 may be one or more private networks, one or more public networks, or a combination thereof. The network 560 may comprise the public switched telephone network (PSTN). The network 560 may comprise the Internet. With this arrangement, a UE 552 within coverage of the access network 556 could engage in air-interface communication with an access node 554 and could thereby communicate via the access node 554 with various application servers and other entities.

The communication system 550 could operate in accordance with a particular radio access technology (RAT), with communications from an access node 554 to UEs 552 defining a downlink or forward link and communications from the UEs 552 to the access node 554 defining an uplink or reverse link. Over the years, the industry has developed various generations of RATs, in a continuous effort to increase available data rate and quality of service for end users. These generations have ranged from "1G," which used simple analog frequency modulation to facilitate basic voice-call service, to "4G" - such as LTE, which now facilitates mobile broadband service using technologies such as orthogonal frequency division multiplexing (OFDM) and multiple input multiple output (MIMO).

Recently, the industry has been exploring developments in "5G" and particularly "5G NR" (5G New Radio), which may use a scalable OFDM air interface, advanced channel coding, massive MIMO, beamforming, mobile mmWave (e.g., frequency bands above 24 GHz), and/or other features, to support higher data rates and countless applications, such as mission-critical services, enhanced mobile broadband, and massive IoT. 5G is hoped to provide virtually unlimited bandwidth on demand, for example providing access on demand to as much as 20 gigabits per second (Gbps) downlink data throughput and as much as 10 Gbps uplink data throughput. Due to the increased bandwidth associated with 5G, it is expected that the new networks will serve, in addition to conventional cell phones, general Internet service providers for laptops and desktop computers, competing with existing Internet service providers (ISPs) such as cable Internet, and also will make possible new applications in IoT and machine to machine areas.

In accordance with the RAT, each access node 554 could provide service on one or more radio-frequency (RF) carriers, each of which could be frequency division duplex (FDD), with separate frequency channels for downlink and uplink communication, or time division duplex (TDD), with a single frequency channel multiplexed over time between downlink and uplink use. Each such frequency channel could be defined as a specific range of frequency (e.g., in RF spectrum) having a bandwidth and a center frequency and thus extending from a low-end frequency to a high-end frequency. Further, on the downlink and uplink channels, the coverage of each access node 554 could define an air interface configured in a specific manner to define physical resources for carrying information wirelessly between the access node 554 and UEs 552.

Without limitation, for instance, the air interface could be divided over time into frames, subframes, and symbol time segments, and over frequency into subcarriers that could be modulated to carry data. The example air interface could thus define an array of time-frequency resource elements each being at a respective symbol time segment and subcarrier, and the subcarrier of each resource element could be modulated to carry data. Further, in each subframe or other transmission time interval (TTI), the resource elements on the downlink and uplink could be grouped to define physical resource blocks (PRBs) that the access node could allocate as needed to carry data between the access node and served UEs 552.

In addition, certain resource elements on the example air interface could be reserved for special purposes. For instance, on the downlink, certain resource elements could be reserved to carry synchronization signals that UEs 552 could detect as an indication of the presence of coverage and to establish frame timing, other resource elements could be reserved to carry a reference signal that UEs 552 could measure in order to determine coverage strength, and still other resource elements could be reserved to carry other control signaling such as PRB-scheduling directives and acknowledgement messaging from the access node 554 to served UEs 552. And on the uplink, certain resource elements could be reserved to carry random access signaling from UEs 552 to the access node 554, and other resource elements could be reserved to carry other control signaling such as PRB-scheduling requests and acknowledgement signaling from UEs 552 to the access node 554.

The access node 554, in some instances, may be split functionally into a radio unit (RU), a distributed unit (DU), and a central unit (CU) where each of the RU, DU, and CU have distinctive roles to play in the access network 556. The RU provides radio functions. The DU provides L1 and L2 real-time scheduling functions; and the CU provides higher L2 and L3 non-real time scheduling. This split supports flexibility in deploying the DU and CU. The CU may be hosted in a regional cloud data center. The DU may be co-located with the RU, or the DU may be hosted in an edge cloud data center.

Turning now to FIG. 7B, further details of the core network 558 are described. In an embodiment, the core network 558 is a 5G core network. 5G core network technology is based on a service based architecture paradigm. Rather than constructing the 5G core network as a series of special purpose communication nodes (e.g., a home subscriber server (HSS) node, a mobile management entity (MME) node, etc.) running on dedicated server computers, the 5G core network is provided as a set of services or network functions. These services or network functions can be executed on virtual servers in a cloud computing environment which supports dynamic scaling and avoidance of long-term capital expenditures (fees for use may substitute for capital expenditures). These network functions can include, for example, a user plane function (UPF) 579, an authentication server function (AUSF) 575, an access and mobility management function (AMF) 576, a session management function (SMF) 577, a network exposure function (NEF) 570, a network repository function (NRF) 571, a policy control function (PCF) 572, a unified data management (UDM) 573, a network slice selection function (NSSF) 574, and other network functions. The network functions may be referred to as virtual network functions (VNFs) in some contexts.

Network functions may be formed by a combination of small pieces of software called microservices. Some microservices can be re-used in composing different network functions, thereby leveraging the utility of such microservices. Network functions may offer services to other network functions by extending application programming interfaces (APIs) to those other network functions that call their services via the APIs. The 5G core network 558 may be segregated into a user plane 580 and a control plane 582, thereby promoting independent scalability, evolution, and flexible deployment.

The UPF 579 delivers packet processing and links the UE 552, via the access network 556, to a data network 590 (e.g., the network 560 illustrated in FIG. 5A). The AMF 576 handles registration and connection management of non-access stratum (NAS) signaling with the UE 552. Said in other words, the AMF 576 manages UE registration and mobility issues. The AMF 576 manages reachability of the UEs 552 as well as various security issues. The SMF 577 handles session management issues. Specifically, the SMF 577 creates, updates, and removes (destroys) protocol data unit (PDU) sessions and manages the session context within the UPF 579. The SMF 577 decouples other control plane functions from user plane functions by performing dynamic host configuration protocol (DHCP) functions and Internet protocol (IP) address management functions. The AUSF 575 facilitates security processes.

The NEF 570 securely exposes the services and capabilities provided by network functions. The NRF 571 supports service registration by network functions and discovery of network functions by other network functions. The PCF 572 supports policy control decisions and flow based charging control. The UDM 573 manages network user data and can be paired with a user data repository (UDR) that stores user data such as customer profile information, customer authentication number, and encryption keys for the information. An application function 592, which may be located outside of the core network 558, exposes the application layer for interacting with the core network 558. In an embodiment, the application function 592 may be executed on an application server 559 located geographically proximate to the UE 552 in an "edge computing" deployment mode. The core network 558 can provide a network slice to a subscriber, for example an enterprise customer, that is composed of a plurality of 5G network functions that are configured to provide customized communication service for that subscriber, for example to provide communication service in accordance with communication policies defined by the customer. The NSSF 574 can help the AMF 576 to select the network slice instance (NSI) for use with the UE 552.

FIG. 8 illustrates a computer system 380 suitable for implementing one or more embodiments disclosed herein. The computer system 380 includes a processor 382 (which may be referred to as a central processor unit or CPU) that is in communication with memory devices including secondary storage 384, read only memory (ROM) 386, RAM 388, input/output (I/O) devices 390, and network connectivity devices 392. The processor 382 may be implemented as one or more CPU chips.

It is understood that by programming and/or loading executable instructions onto the computer system 380, at least one of the CPU 382, the RAM 388, and the ROM 386 are changed, transforming the computer system 380 in part into a particular machine or apparatus having the novel functionality taught by the present disclosure. It is fundamental to the electrical engineering and software engineering arts that functionality that can be implemented by loading executable software into a computer can be converted to a hardware implementation by well-known design rules. Decisions between implementing a concept in software versus hardware typically hinge on considerations of stability of the design and numbers of units to be produced rather than any issues involved in translating from the software domain to the hardware domain. Generally, a design that is still subject to frequent change may be preferred to be implemented in software, because re-spinning a hardware implementation is more expensive than re-spinning a software design. Generally, a design that is stable that will be produced in large volume may be preferred to be implemented in hardware, for example in an application specific integrated circuit (ASIC), because for large production runs the hardware implementation may be less expensive than the software implementation. Often a design may be developed and tested in a software form and later transformed, by well-known design rules, to an equivalent hardware implementation in an ASIC that hardwires the instructions of the software. In the same manner as a machine controlled by a new ASIC is a particular machine or apparatus, likewise a computer that has been programmed and/or loaded with executable instructions may be viewed as a particular machine or apparatus.

Additionally, after the system 380 is turned on or booted, the CPU 382 may execute a computer program or application. For example, the CPU 382 may execute software or firmware stored in the ROM 386 or stored in the RAM 388. **In** some cases, on boot and/or when the application is initiated, the CPU 382 may copy the application or portions of the application from the secondary storage 384 to the RAM 388 or to memory space within the CPU 382 itself, and the CPU 382 may then execute instructions that the application is comprised of. **In** some cases, the CPU 382 may copy the application or portions of the application from memory accessed via the network connectivity devices 392 or via the I/O devices 390 to the RAM 388 or to memory space within the CPU 382, and the CPU 382 may then execute instructions that the application is comprised of. During execution, an application may load instructions into the CPU 382, for example load some of the instructions of the application into a cache of the CPU 382. **In** some contexts, an application that is executed may be said to configure the CPU 382 to do something, e.g., to configure the CPU 382 to perform the function or functions promoted by the subject application. When the CPU 382 is configured in this way by the application, the CPU 382 becomes a specific purpose computer or a specific purpose machine.

The secondary storage 384 is typically comprised of one or more disk drives or tape drives and is used for non-volatile storage of data and as an over-flow data storage device if RAM 388 is not large enough to hold all working data. Secondary storage 384 may be used to store programs which are loaded into RAM 388 when such programs are selected for execution. The ROM 386 is used to store instructions and perhaps data which are read during program execution. ROM 386 is a non-volatile memory device which typically has a small memory capacity relative to the larger memory capacity of secondary storage 384. The RAM 388 is used to store volatile data and perhaps to store instructions. Access to both ROM 386 and RAM 388 is typically faster than to secondary storage 384. The secondary storage 384, the RAM 388, and/or the ROM 386 may be referred to in some contexts as computer readable storage media and/or non-transitory computer readable media.

I/O devices 390 may include printers, video monitors, liquid crystal displays (LCDs), touch screen displays, keyboards, keypads, switches, dials, mice, track balls, voice recognizers, card readers, paper tape readers, or other well-known input devices.

The network connectivity devices 392 may take the form of modems, modem banks, Ethernet cards, USB interface cards, serial interfaces, token ring cards, fiber distributed data interface (FDDI) cards, wireless local area network (WLAN) cards, radio transceiver cards, and/or other well-known network devices. The network connectivity devices 392 may provide wired communication links and/or wireless communication links (e.g., a first network connectivity device 392 may provide a wired communication link and a second network connectivity device 392 may provide a wireless communication link). Wired communication links may be provided in accordance with Ethernet (IEEE 802.3), IP, time division multiplex (TDM), data over cable service interface specification (DOCSIS), wavelength division multiplexing (WDM), and/or the like. In an embodiment, the radio transceiver cards may provide wireless communication links using protocols such as CDMA, global system for mobile communications (GSM), LTE, WiFi (IEEE 802.11), Bluetooth, Zigbee, narrowband Internet of things (NB IoT), near field communications (NFC), and radio frequency identity (RFID). The radio transceiver cards may promote radio communications using 5G, 5G New Radio, or 5G LTE radio communication protocols. These network connectivity devices 392 may enable the processor 382 to communicate with the Internet or one or more intranets. With such a network connection, it is contemplated that the processor 382 might receive information from the network, or might output information to the network in the course of performing the above-described method steps. Such information, which is often represented as a sequence of instructions to be executed using processor 382, may be received from and outputted to the network, for example, in the form of a computer data signal embodied in a carrier wave.

Such information, which may include data or instructions to be executed using processor 382 for example, may be received from and outputted to the network, for example, in the form of a computer data baseband signal or signal embodied in a carrier wave. The baseband signal or signal embedded in the carrier wave, or other types of signals currently used or hereafter developed, may be generated according to several methods well-known to one skilled in the art. The baseband signal and/or signal embedded in the carrier wave may be referred to in some contexts as a transitory signal.

The processor 382 executes instructions, codes, computer programs, scripts which it accesses from hard disk, floppy disk, optical disk (these various disk-based systems may all be considered secondary storage 384), flash drive, ROM 386, RAM 388, or the network connectivity devices 392. While only one processor 382 is shown, multiple processors may be present. Thus, while instructions may be discussed as executed by a processor, the instructions may be executed simultaneously, serially, or otherwise executed by one or multiple processors. Instructions, codes, computer programs, scripts, and/or data that may be accessed from the secondary storage 384, for example, hard drives, floppy disks, optical disks, and/or other device, the ROM 386, and/or the RAM 388 may be referred to in some contexts as non-transitory instructions and/or non-transitory information.

In an embodiment, the computer system 380 may comprise two or more computers in communication with each other that collaborate to perform a task. For example, but not by way of limitation, an application may be partitioned in such a way as to permit concurrent and/or parallel processing of the instructions of the application. Alternatively, the data processed by the application may be partitioned in such a way as to permit concurrent and/or parallel processing of different portions of a data set by the two or more computers. In an embodiment, virtualization software may be employed by the computer system 380 to provide the functionality of a number of servers that is not directly bound to the number of computers in the computer system 380. For example, virtualization software may provide twenty virtual servers on four physical computers. In an embodiment, the functionality disclosed above may be provided by executing the application and/or applications in a cloud computing environment. Cloud computing may comprise providing computing services via a network connection using dynamically scalable computing resources. Cloud computing may be supported, at least in part, by virtualization software. A cloud computing environment may be established by an enterprise and/or may be hired on an as-needed basis from a third-party provider. Some cloud computing environments may comprise cloud computing resources owned and operated by the enterprise as well as cloud computing resources hired and/or leased from a third-party provider.

In an embodiment, some or all of the functionality disclosed above may be provided as a computer program product. The computer program product may comprise one or more computer readable storage medium having computer usable program code embodied therein to implement the functionality disclosed above. The computer program product may comprise data structures, executable instructions, and other computer usable program code. The computer program product may be embodied in removable computer storage media and/or non-removable computer storage media. The removable computer readable storage medium may comprise, without limitation, a paper tape, a magnetic tape, magnetic disk, an optical disk, a solid state memory chip, for example analog magnetic tape, compact disk read only memory (CD-ROM) disks, floppy disks, jump drives, digital cards, multimedia cards, and others. The computer program product may be suitable for loading, by the computer system 380, at least portions of the contents of the computer program product to the secondary storage 384, to the ROM 386, to the RAM 388, and/or to other non-volatile memory and volatile memory of the computer system 380. The processor 382 may process the executable instructions and/or data structures in part by directly accessing the computer program product, for example by reading from a CD-ROM disk inserted into a disk drive peripheral of the computer system 380. Alternatively, the processor 382 may process the executable instructions and/or data structures by remotely accessing the computer program product, for example by downloading the executable instructions and/or data structures from a remote server through the network connectivity devices 392. The computer program product may comprise instructions that promote the loading and/or copying of data, data structures, files, and/or executable instructions to the secondary storage 384, to the ROM 386, to the RAM 388, and/or to other non-volatile memory and volatile memory of the computer system 380.

In some contexts, the secondary storage 384, the ROM 386, and the RAM 388 may be referred to as a non-transitory computer readable medium or a computer readable storage media. A dynamic RAM embodiment of the RAM 388, likewise, may be referred to as a non-transitory computer readable medium in that while the dynamic RAM receives electrical power and is operated in accordance with its design, for example during a period of time during which the computer system 380 is turned on and operational, the dynamic RAM stores information that is written to it. Similarly, the processor 382 may comprise an internal RAM, an internal ROM, a cache memory, and/or other internal non-transitory storage blocks, sections, or components that may be referred to in some contexts as non-transitory computer readable media or computer readable storage media.

While several embodiments have been provided in the present disclosure, it should be understood that the disclosed systems and methods may be embodied in many other specific forms without departing from the scope of the present disclosure. The present examples are to be considered as illustrative and not restrictive, and the intention is not to be limited to the details given herein. For example, the various elements or components may be combined or integrated in another system or certain features may be omitted or not implemented.

Also, techniques, systems, subsystems, and methods described and illustrated in the various embodiments as discrete or separate may be combined or integrated with other systems, modules, techniques, or methods without departing from the scope of the present disclosure. Other items shown or discussed as directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the scope disclosed herein.

Embodiments of the present disclosure also reside in the following numbered clauses:
Clause 1. A computer-implemented method of providing artificial intelligence (AI) edge service management, the method comprising:
   receiving, by an application stored in non-transitory memory of a core network node associated with a telecommunications service provider and executable by a processor of the core network node, a registration request indicating a customer identifier (ID) identifying a customer, a plurality of customer premises edge (CPE) nodes associated with the customer, and first information associated with at least one AI model;
   generating, by the application, based on one or more rules associated with the customer ID, one or more application programming interfaces (APIs) for interacting with the at least one AI model;
   creating, by the application, an agent software package comprising second information associated with the at least one AI model, the one or more APIs, and an agent application to facilitate interactions with the at least one AI model based on the one or more APIs, the second information being based on the first information;
   initiating, by the application, an installation of the agent software package on individual ones of one or more CPE nodes of the plurality of CPE nodes;
   collecting, by the application, performance data associated with the at least one AI model based on execution of the agent application on the individual ones of the one or more CPE nodes; and
   initiating, by the application, based on the performance data failing to satisfy one or more criteria, an update of the at least one AI model.
Clause 2. The method of clause 1, wherein the at least one AI model comprises at least one of a machine learning (ML) model, a deep learning model, a generative AI model, a large-language model (LLM), a retrieval augmentation generation (RAG)-based model, or a multi-modal model.
Clause 3. The method of clause 1 or 2, wherein the one or more rules for generating the one or more APIs comprises API authorization key information associated with the customer ID.
Clause 4. The method of any of clauses 1 to 3, further comprising:
   evaluating, by the application, a resource availability at the individual ones of the plurality of CPE nodes,
   wherein the initiating the installation of the agent software package on the individual ones of the one or more CPE nodes is based on the resource availability at the individual ones of the one or more CPE nodes satisfying one or more second criteria.
Clause 5. The method of any of clauses 1 to 4, wherein the first information associated with the at least one AI model comprises at least one of:
   model architecture information,
   model parameters,
   a knowledgebase,
   a software library, or
   a test case including input sample data and a corresponding target output.
Clause 6. The method of any of clauses 1 to 5, further comprising:
   applying, by the application, a quantization scheme to the at least one AI model to generate a quantized AI model; and
   evaluating, by the application, a performance of the quantized AI model against the test case,
   wherein:
      the second information associated with the at least one AI model in the agent software package is further based on the quantized AI model, and
      the initiating the installation of the agent software package on the individual ones of the one or more CPE nodes is based on the performance of the quantized AI model satisfying one or more third criteria.
Clause 7. The method of any of clauses 1 to 6, wherein the receiving the registration request to register the plurality of CPE nodes for hosting the at least one AI model comprises:
   receiving, by the core network node, from a second network node associated with the customer, the registration request over a virtual private network (VPN) connection between the core network node and the second network node.
Clause 8. The method of any of clauses 1 to 7, wherein the initiating the installation of the agent software package comprises:
   transmitting, by the application, to an individual one of the one or more CPE nodes, the agent software package over a virtual private network (VPN) connection between the core network node and the respective CPE node.
Clause 9. The method of any of clauses 1 to 8, further comprising:
   detecting, by the application, based on the performance data, at least one of a data drift or a model drift associated with the at least one AI model; and
   determining, by the application, that the performance data fails to satisfy the one or more criteria based on the detection of the at least one of the data drift or the model drift associated with the at least one AI model.
Clause 10. The method of any of clauses 1 to 9, wherein the initiating the update of the at least one AI model comprises:
   transmitting, by the application, to a third network node associated with the customer, a first instruction to update the at least one AI model, the first instruction comprising the performance data;
   receiving, by the application, based on the first instruction, an updated AI model comprising updated parameters; and
   transmitting, by the application, to an individual one of the one or more CPE nodes, an indication of the updated AI model.
Clause 11. A computer-implemented method of providing artificial intelligence (AI) edge service management, the method comprising:
   receiving, by an application stored in non-transitory memory of a core network node associated with a telecommunications service provider network and executable by a processor of the core network node, from a network node associated with a customer network, a registration request indicating a customer identifier (ID) and at least one AI model;
   generating, by the application, based on one or more rules associated with the customer ID, one or more application programming interfaces (APIs) associated with the at least one AI model;
   creating, by the application, an agent software package comprising information associated with the at least one AI model, the one or more APIs, and an agent application to facilitate operations of the at least one AI model based on the one or more APIs;
   initiating, by the application, an installation of the agent software package on individual ones of a plurality of edge network nodes, each associated with one of the telecommunications service provider network or the customer network;
   collecting, by the application, runtime statistics associated with the operations of the at least one AI model based on execution of the agent application on the individual ones of the plurality of edge network nodes; and
   modifying, by the application, based on the runtime statistics, a number of the plurality of edge network nodes for hosting the at least one AI model.
Clause 12. The method of clause 11, wherein the runtime statistics are associated with at least one of central processing unit (CPU) usage, graphics processing unit (GPU) usage, or memory usage associated with the operations of the at least one AI model at the individual ones of the plurality of edge network nodes.
Clause 13. The method of clause 11 or 12, wherein:
   the registration request further comprises an indication of one or more CPE nodes associated with the customer network, and
   the plurality of edge network nodes comprises the one or more CPE nodes indicated by the registration request.
Clause 14. The method of any of clauses 11 to 13, further comprising:
   outputting, by the application, via a user interface, the runtime statistics associated with the at least one AI model.
Clause 15. The method of any of clauses 11 to 14, further comprising:
   receiving, by the application, from a second network node associated with the customer network, based on the runtime statistics, a node change request to remove one of the plurality of edge network nodes associated with the customer network or add an additional network node associated with the customer network for hosting the at least one AI model,
   wherein the modifying the number of the plurality of edge network nodes for hosting the at least one AI model is further based on the node change request.
Clause 16. The method of any of clauses 11 to 15, further comprising:
   receiving, by the application, from a third network node associated with the customer network, a second registration request to register the third network node for hosting the at least one AI model, wherein the second registration request comprises a customer group identifier (ID) and an ID of the third network node; and
   initiating, by the application, a second installation of the agent software package on the third network node based on a comparison between the ID of the third network node and a predetermined list of device IDs associated with the customer group ID.
Clause 17. A method comprising:
   receiving, by an application stored in non-transitory memory of a core network node in a core network associated with a telecommunications service provider and executable by a processor of the core network node, from a first network node associated with a customer network, a request indicating at least one artificial intelligence (AI) model;
   selecting, by the application, one or more mobile edge AI nodes from the core network to host the at least one AI model;
   transmitting, by the application, to individual ones of the selected one or more mobile edge AI nodes, an agent software package comprising information associated with the at least one AI model, one or more application programming interfaces (APIs), and an agent application based on the one or more APIs; and
   collecting, by the application, performance data associated with the at least one AI model based on execution of the agent application on the individual ones of the one or more mobile edge AI nodes; and
   initiating, by the application, based on the performance data failing to satisfy one or more criteria, an update of the at least one AI model.
Clause 18. The method of clause 17, wherein the selecting the one or more mobile edge AI nodes from the core network is based on at least one of geographical regions, time zones, latencies, throughputs, or resource constraints associated with the one or more mobile edge AI nodes.
Clause 19. The method of clause 17 or 18, further comprising:
   applying, by the application, a quantization scheme to the at least one AI model to generate a quantized AI model; and
   evaluating, by the application, a performance of the quantized AI model,
   wherein:
      the initiating the installation of the agent software package on the individual ones of the selected one or more mobile edge AI nodes is based on the performance of the quantized AI model satisfying one or more second criteria, and
      the information associated with the at least one AI model in the agent software package is further based on the quantized AI model.
Clause 20. The method of any of clauses 17 to 19, wherein the initiating the update of the at least one AI model comprises:
   transmitting, by the application, to a second network node associated with the customer network, a first instruction to update the at least one AI model, the first instruction comprising the performance data;
   receiving, by the application, based on the first instruction, an updated AI model comprising updated parameters; and
   transmitting, by the application, to an individual one of the selected one or more mobile edge AI nodes, an indication of the updated AI model.

## Claims

1. A computer-implemented method of providing artificial intelligence (AI) edge service management, the method comprising:
receiving, by an application stored in non-transitory memory of a core network node associated with a telecommunications service provider and executable by a processor of the core network node, a registration request indicating a customer identifier (ID) identifying a customer, a plurality of customer premises edge (CPE) nodes associated with the customer, and first information associated with at least one AI model;
generating, by the application, based on one or more rules associated with the customer ID, one or more application programming interfaces (APIs) for interacting with the at least one AI model;
creating, by the application, an agent software package comprising second information associated with the at least one AI model, the one or more APIs, and an agent application to facilitate interactions with the at least one AI model based on the one or more APIs, the second information being based on the first information;
initiating, by the application, an installation of the agent software package on individual ones of one or more CPE nodes of the plurality of CPE nodes;
collecting, by the application, performance data associated with the at least one AI model based on execution of the agent application on the individual ones of the one or more CPE nodes; and
initiating, by the application, based on the performance data failing to satisfy one or more criteria, an update of the at least one AI model.

2. The method of claim 1, wherein the at least one AI model comprises at least one of a machine learning (ML) model, a deep learning model, a generative AI model, a large-language model (LLM), a retrieval-augmentation generation (RAG)-based model, or a multi-modal model.

3. The method of claim 1 or 2, wherein the one or more rules for generating the one or more APIs comprises API authorization key information associated with the customer ID.

4. The method of any preceding claim, further comprising:
evaluating, by the application, a resource availability at the individual ones of the plurality of CPE nodes,
wherein the initiating the installation of the agent software package on the individual ones of the one or more CPE nodes is based on the resource availability at the individual ones of the one or more CPE nodes satisfying one or more second criteria.

5. The method of any preceding claim, wherein the first information associated with the at least one AI model comprises at least one of:
model architecture information,
model parameters,
a knowledgebase,
a software library, or
a test case including input sample data and a corresponding target output;
further comprising:
applying, by the application, a quantization scheme to the at least one AI model to generate a quantized AI model; and
evaluating, by the application, a performance of the quantized AI model against the test case,
wherein:
the second information associated with the at least one AI model in the agent software package is further based on the quantized AI model, and
the initiating the installation of the agent software package on the individual ones of the one or more CPE nodes is based on the performance of the quantized AI model satisfying one or more third criteria.

6. The method of any preceding claim, wherein the receiving the registration request to register the plurality of CPE nodes for hosting the at least one AI model comprises:
receiving, by the core network node, from a second network node associated with the customer, the registration request over a virtual private network (VPN) connection between the core network node and the second network node.

7. The method of any preceding claim, further comprising:
detecting, by the application, based on the performance data, at least one of a data drift or a model drift associated with the at least one AI model; and
determining, by the application, that the performance data fails to satisfy the one or more criteria based on the detection of the at least one of the data drift or the model drift associated with the at least one AI model.

8. The method of any preceding claim, wherein the initiating the update of the at least one AI model comprises:
transmitting, by the application, to a third network node associated with the customer, a first instruction to update the at least one AI model, the first instruction comprising the performance data;
receiving, by the application, based on the first instruction, an updated AI model comprising updated parameters; and
transmitting, by the application, to an individual one of the one or more CPE nodes, an indication of the updated AI model.

9. A computer-implemented method of providing artificial intelligence (AI) edge service management, the method comprising:
receiving, by an application stored in non-transitory memory of a core network node associated with a telecommunications service provider network and executable by a processor of the core network node, from a network node associated with a customer network, a registration request indicating a customer identifier (ID) and at least one AI model;
generating, by the application, based on one or more rules associated with the customer ID, one or more application programming interfaces (APIs) associated with the at least one AI model;
creating, by the application, an agent software package comprising information associated with the at least one AI model, the one or more APIs, and an agent application to facilitate operations of the at least one AI model based on the one or more APIs;
initiating, by the application, an installation of the agent software package on individual ones of a plurality of edge network nodes, each associated with one of the telecommunications service provider network or the customer network;
collecting, by the application, runtime statistics associated with the operations of the at least one AI model based on execution of the agent application on the individual ones of the plurality of edge network nodes; and
modifying, by the application, based on the runtime statistics, a number of the plurality of edge network nodes for hosting the at least one AI model.

10. The method of claim 9, wherein the runtime statistics are associated with at least one of central processing unit (CPU) usage, graphics processing unit (GPU) usage, or memory usage associated with the operations of the at least one AI model at the individual ones of the plurality of edge network nodes.

11. The method of claim 9 or 10, wherein:
the registration request further comprises an indication of one or more CPE nodes associated with the customer network, and
the plurality of edge network nodes comprises the one or more CPE nodes indicated by the registration request.

12. The method of any of claims 9 to 11, further comprising:
receiving, by the application, from a second network node associated with the customer network, based on the runtime statistics, a node change request to remove one of the plurality of edge network nodes associated with the customer network or add an additional network node associated with the customer network for hosting the at least one AI model,
wherein the modifying the number of the plurality of edge network nodes for hosting the at least one AI model is further based on the node change request.

13. The method of any of claims 9 to 12, further comprising:
receiving, by the application, from a third network node associated with the customer network, a second registration request to register the third network node for hosting the at least one AI model, wherein the second registration request comprises a customer group identifier (ID) and an ID of the third network node; and
initiating, by the application, a second installation of the agent software package on the third network node based on a comparison between the ID of the third network node and a predetermined list of device IDs associated with the customer group ID.

14. A method comprising:
receiving, by an application stored in non-transitory memory of a core network node in a core network associated with a telecommunications service provider and executable by a processor of the core network node, from a first network node associated with a customer network, a request indicating at least one artificial intelligence (AI) model;
selecting, by the application, one or more mobile edge AI nodes from the core network to host the at least one AI model;
transmitting, by the application, to individual ones of the selected one or more mobile edge AI nodes, an agent software package comprising information associated with the at least one AI model, one or more application programming interfaces (APIs), and an agent application based on the one or more APIs; and
collecting, by the application, performance data associated with the at least one AI model based on execution of the agent application on the individual ones of the one or more mobile edge AI nodes; and
initiating, by the application, based on the performance data failing to satisfy one or more criteria, an update of the at least one AI model.

15. The method of claim 14, wherein the selecting the one or more mobile edge AI nodes from the core network is based on at least one of geographical regions, time zones, latencies, throughputs, or resource constraints associated with the one or more mobile edge AI nodes.
